# EUROPEAN PATENT APPLICATION

(11) **EP 4 538 033 A1**
(43) Date of publication of application: **16.04.2025**
(21) Application number: 23835446.8
(22) Date of filing: 30.06.2023
(51) Int. Cl.: B32B 27/00, B32B 27/30, C09K 3/18

(54) **LAMINATE**

(30) Priority: 08.07.2022 CN 202210801338
(71) Applicant: DAIKIN INDUSTRIES, LTD., Osaka-shi, Osaka 530-0001 (JP)
(72) Inventor: MA, Yi, Jiangsu 215522 (CN); SHEN, Hao, Jiangsu 215522 (CN); ISHII, Daiki, Jiangsu 215522 (CN); NOSE, Masatoshi, Jiangsu 215522 (CN); SAKAMOTO, Eiji, Jiangsu 215522 (CN)
(74) Representative: Hoffmann Eitle
(86) International application number: PCT/JP2023/024465
(87) International publication number: WO 2024/009914

(57) **Abstract**

The present invention provides a laminate comprising a substrate, an underlayer disposed on the substrate, and a surface-treating layer disposed on the underlayer, wherein
the underlayer is a layer formed of (A) polysilazane represented by the following formula (P) or (B) aminosilane represented by the following formula (Q) and the surface-treating layer is a layer formed of a fluorine-containing silane compound.

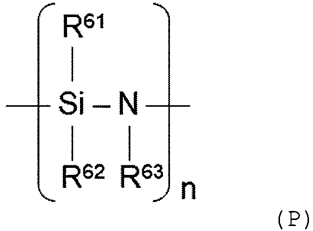

**N(R⁷¹-SiR⁷²₃)ₘR⁷³₃₋ₘ** (Q)

## Description

### Technical Field

The present disclosure relates to a laminate.

### Background Art

Certain types of fluorine-containing silane compounds are known to be capable of providing excellent water-repellency, oil-repellency, antifouling properties, and the like when used in surface treatment of a substrate. A layer obtained from a surface-treating agent containing a fluorine-containing silane compound (hereinafter, also referred to as a "surface-treating layer") is applied as a so-called functional thin film to a large variety of substrates such as glass, plastics, fibers, sanitary articles, and building materials (Patent Literature 1).

### Citation List

### Patent Literature

Patent Literature 1: International Publication No. WO 2018-056413

### Summary of Invention

### Technical Problem

While the fluorine-containing silane compound described in Patent Literature 1 can provide a surface-treating layer having excellent function, a surface-treating layer having greater ultraviolet resistance is required.

An object of the present disclosure is to provide a laminate having a surface-treating layer having greater ultraviolet resistance.

### Solution to Problem

The present disclosure includes the following embodiments.
[1] A laminate comprising a substrate, an underlayer disposed on the substrate, and a surface-treating layer disposed on the underlayer, wherein
   the underlayer is a layer formed of:
   (A) polysilazane represented by the following formula (P): 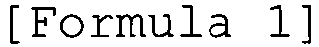 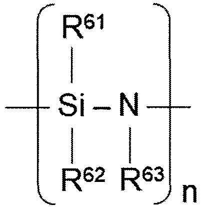 wherein
      R⁶¹ is a hydrogen atom or a C₁₋₆ alkyl group,
      R⁶² is a hydrogen atom, a C₁₋₆ alkyl group, or a group having a functional group,
      R⁶³ is a hydrogen atom, a C₁₋₆ alkyl group, or a group having a functional group, and
      n is an integer of 2 to 100; or
   (B) aminosilane represented by the following formula (Q): 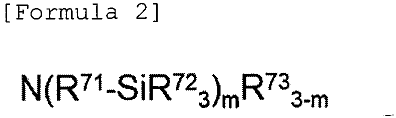 wherein
      R⁷¹ is each independently a C₁₋₆ alkylene group,
      R⁷² is each independently a hydrolyzable group,
      R⁷³ is a hydrogen atom or a C₁₋₆ alkyl group, and
      m is 2 or 3; and
      the surface-treating layer is a layer formed of a fluorine-containing silane compound.
[2] The laminate according to [1], wherein the fluorine-containing silane compound is a compound represented by the following formula (A1) or (A2): 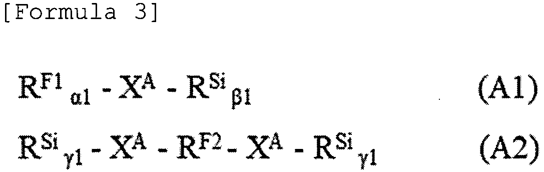 wherein
   R^{F1} is each independently Rf¹- or Rf¹-R^{F}-O_{q}-,
   R^{F2} is -R^{f2}- or -Rf²ₚ-R^{F}-O_{q}-,
   R^{F} is each independently a divalent fluoropolyether group,
   Rf¹ is each independently a C₁₋₁₆ alkyl group optionally substituted with one or more fluorine atoms,
   Rf² is a C₁₋₆ alkylene group optionally substituted with one or more fluorine atoms,
   p is 0 or 1,
   q is each independently 0 or 1,
   R^{Si} is each independently a monovalent group containing a Si atom to which a hydroxyl group, a hydrolyzable group, a hydrogen atom, or a monovalent organic group is bonded,
   at least one R^{Si} is a monovalent group containing a Si atom to which a hydroxyl group or a hydrolyzable group is bonded,
   X^{A} is each independently a single bond or a di- to decavalent organic group,
   α1 is an integer of 1 to 9,
   β1 is an integer of 1 to 9, and
   γ1 is each independently an integer of 1 to 9.
[3] The laminate according to [2], wherein
   Rf¹ is each independently a C₁₋₁₆ perfluoroalkyl group, and
   Rf² is each independently a C₁₋₆ perfluoroalkylene group.
[4] The laminate according to [2] or [3], wherein
   R^{F1} is each independently Rf¹-R^{F}-O_{q}-, and
   R^{F2} is -Rf²ₚ-R^{F}-O_{q}-.
[5] The laminate according to any one of [2] to [4], wherein
   R^{F} is each independently a group represented by the following formula:

   -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

   wherein
   R^{Fa} is each independently a hydrogen atom, a fluorine atom, or a chlorine atom; and
   a, b, c, d, e, and f are each independently an integer of 0 to 200, the sum of a, b, c, d, e, and f is 1 or more, and the occurrence order of the respective repeating units enclosed in parentheses provided with a, b, c, d, e, or f is not limited in the formula, provided that when all R^{Fa} groups are hydrogen atoms or chlorine atoms, at least one of a, b, c, e, and f is 1 or more.
[6] The laminate according to [5], wherein R^{Fa} is a fluorine atom.
[7] The laminate according to any one of [2] to [6], wherein
   R^{F} is each independently a group represented by the following formula (f1), (f2), (f3), (f4), (f5), or (f6):

      -(OC₃F₆)_{d}-(OC₂F₄)ₑ- (f1)

      wherein d is an integer of 1 to 200, and e is 0 or 1;

      -(OC₄F₈)_{c}-(OC₃F₆)_{d}-(OC₂F₄)ₑ-(OCF₂)_{f}- (f2)

      wherein c and d are each independently an integer of 0 to 30,
   e and f are each independently an integer of 1 to 200,
   the sum of c, d, e, and f is an integer of 10 to 200, and
   the occurrence order of the respective repeating units enclosed in parentheses provided with the subscript c, d, e, or f is not limited in the formula;

      -(R⁶-R⁷)_{g}- (f3)

      wherein R⁶ is OCF₂ or OC₂F₄,
   R⁷ is a group selected from OC₂F₄, OC₃F₆, OC₄F₈, OC₅F₁₀, and OC₆F₁₂, or is a combination of two or three groups selected from these groups, and
   g is an integer of 2 to 100;

      - (R⁶-R⁷)_{g}-R^{r}-(R⁷'-R⁶')_{g'}- (f4)

      wherein R⁶ is OCF₂ or OC₂F₄,
   R⁷ is a group selected from OC₂F₄, OC₃F₆, OC₄F₈, OC₅F₁₀, and OC₆F₁₂, or is a combination of two or three groups independently selected from these groups,
   R⁶' is OCF₂ or OC₂F₄,
   R⁷' is a group selected from OC₂F₄, OC₃F₆, OC₄F₈, OC₅F₁₀, and OC₆F₁₂, or is a combination of two or three groups independently selected from these groups,
   g is an integer of 2 to 100,
   g' is an integer of 2 to 100, and
   R^{r} is any of: 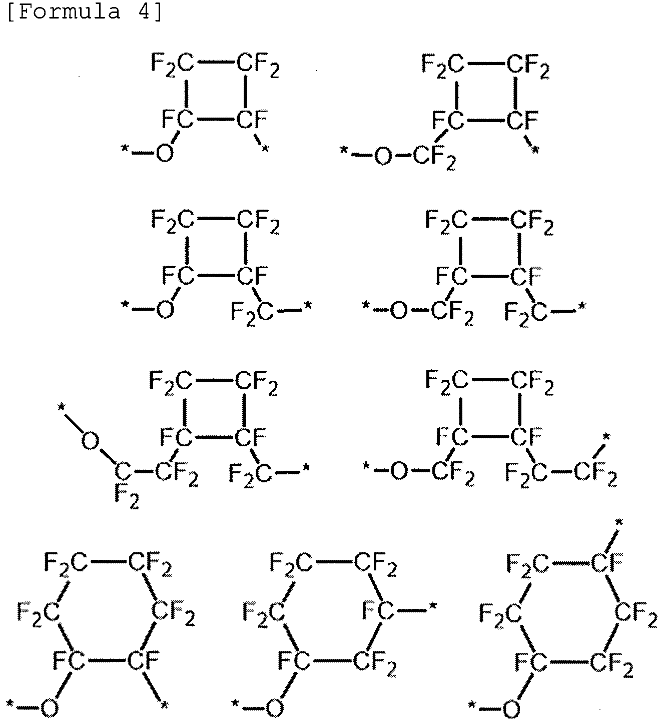 wherein * represents a bond position;

      -(OC₆F₁₂)ₐ-(OC₅F₁₀)_{b}-(OC₄F₈)_{c}-(OC3F6)_{d}-(OC2F4)ₑ-(OCF2)_{f}- (f5)

      wherein e is an integer of 1 or more and 200 or less, a, b, c, d, and f are each independently an integer of 0 or more and 200 or less, and the occurrence order of the respective repeating units enclosed in parentheses provided with a, b, c, d, e or f is not limited in the formula; and

      -(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)

      wherein f is an integer of 1 or more and 200 or less, a, b, c, d, and e are each independently an integer of 0 or more and 200 or less, and the occurrence order of the respective repeating units enclosed in parentheses provided with a, b, c, d, e or f is not limited in the formula.
[8] The laminate according to any one of [2] to [7], wherein
   R^{Si} is a group represented by the following formula (S1), (S2), (S3), (S4), or (S5): 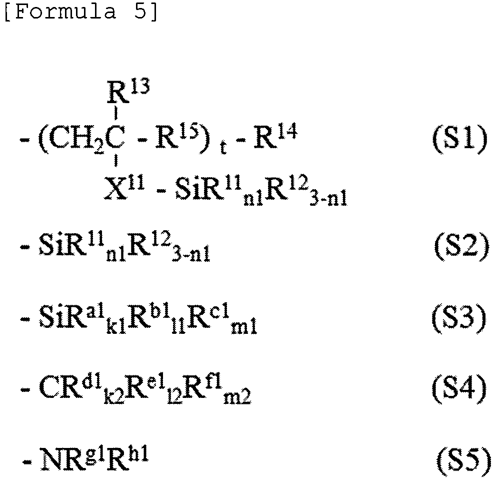 wherein
   R¹¹ is each independently a hydroxyl group or a hydrolyzable group,
   R¹² is each independently a hydrogen atom or a monovalent organic group,
   n1 is each independently an integer of 0 to 3 for each (SiR¹¹ₙ₁R¹²₃₋ₙ₁) unit,
   X¹¹ is each independently a single bond or a divalent organic group,
   R¹³ is each independently a hydrogen atom or a monovalent organic group,
   t is each independently an integer of 2 or more,
   R¹⁴ is each independently a hydrogen atom, a halogen atom, or -X¹¹-SiR¹¹ₙ₁R¹²₃₋ₙ₁,
   R¹⁵ is each independently at each occurrence a single bond, an oxygen atom, an alkylene group having 1 to 6 carbon atoms, or an alkyleneoxy group having 1 to 6 carbon atoms,
   R^{a1} is each independently -Z¹-SiR²¹ₚ₁R²²_{q1}R²³ᵣ₁,
   Z¹ is each independently an oxygen atom or a divalent organic group,
   R²¹ is each independently -Z^{1'}-SiR^{21'}_{p1'}R^{22'}_{q1'}R^{23'}_{r1'},
   R²² is each independently a hydroxyl group or a hydrolyzable group,
   R²³ is each independently a hydrogen atom or a monovalent organic group,
   p1 is each independently an integer of 0 to 3,
   q1 is each independently an integer of 0 to 3,
   r1 is each independently an integer of 0 to 3,
   the sum of p1, q1, and r1 is 3 in the (SiR²¹ₚ₁R²²_{q1}R²³ᵣ₁) unit,
   Z^{1'} is each independently an oxygen atom or a divalent organic group,
   R^{21'} is each independently -Z^{1"}-SiR^{22"}_{q1"}R^{23"}_{r1"},
   R^{22'} is each independently a hydroxyl group or a hydrolyzable group,
   R^{23'} is each independently a hydrogen atom or a monovalent organic group,
   p1' is each independently an integer of 0 to 3,
   q1' is each independently an integer of 0 to 3,
   r1' is each independently an integer of 0 to 3,
   the sum of p1', q1', and r1' is 3 in the (SiR^{21'}_{p1'}R^{22'}_{q1'}R^{23'}_{r1'}) unit,
   Z^{1"} is each independently an oxygen atom or a divalent organic group,
   R^{22"} is each independently a hydroxyl group or a hydrolyzable group,
   R^{23"} is each independently a hydrogen atom or a monovalent organic group,
   q1" is each independently an integer of 0 to 3,
   r1" is each independently an integer of 0 to 3,
   the sum of q1" and r1" is 3 in the (SiR^{22"}_{q1"}R^{23"}_{r1"}) unit,
   R^{b1} is each independently a hydroxyl group or a hydrolyzable group,
   R^{c1} is each independently a hydrogen atom or a monovalent organic group,
   k1 is each independently an integer of 0 to 3,
   l1 is each independently an integer of 0 to 3,
   m1 is each independently an integer of 0 to 3,
   the sum of k1, l1, and m1 is 3 in the (SiR^{a1}ₖ₁R^{b1}ₗ₁R^{c1}ₘ₁) unit,
   R^{d1} is each independently -Z²-CR³¹ₚ₂R³²_{q2}R³³ᵣ₂,
   Z² is each independently a single bond, an oxygen atom, or a divalent organic group,
   R³¹ is each independently -Z^{2'}-CR^{32'}_{q2'}R^{33'}_{r2'},
   R³² is each independently -Z³-SiR³⁴ₙ₂R³⁵₃₋ₙ₂,
   R³³ is each independently a hydrogen atom, a hydroxyl group, or a monovalent organic group,
   p2 is each independently an integer of 0 to 3,
   q2 is each independently an integer of 0 to 3,
   r2 is each independently an integer of 0 to 3,
   the sum of p2, q2, and r2 is 3 in the (CR³¹ₚ₂R³²_{q2}R³³ᵣ₂) unit,
   Z^{2'} is each independently a single bond, an oxygen atom, or a divalent organic group,
   R^{32'} is each independently -Z³-SiR³⁴ₙ₂R³⁵₃₋ₙ₂,
   R^{33'} is each independently a hydrogen atom, a hydroxyl group, or a monovalent organic group,
   q2' is each independently an integer of 0 to 3,
   r2' is each independently an integer of 0 to 3,
   the sum of q2' and r2' is 3 in the (CR^{32'}_{q2'}R^{33'}_{r2'}) unit,
   Z³ is each independently a single bond, an oxygen atom, or a divalent organic group,
   R³⁴ is each independently a hydroxyl group or a hydrolyzable group,
   R³⁵ is each independently a hydrogen atom or a monovalent organic group,
   n2 is each independently an integer of 0 to 3,
   R^{e1} is each independently -Z³-SiR³⁴ₙ₂R³⁵₃₋ₙ₂,
   R^{f1} is each independently a hydrogen atom, a hydroxyl group, or a monovalent organic group,
   k2 is each independently an integer of 0 to 3,
   l2 is each independently an integer of 0 to 3,
   m2 is each independently an integer of 0 to 3,
   the sum of k2, l2, and m2 is 3 in the (CR^{d1}ₖ₂R^{e1}ₗ₂R^{f1}ₘ₂) unit,
   R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}₁₂R^{f1}ₘ₂, and
   Z⁴ is each independently a single bond, an oxygen atom, or a divalent organic group,
   provided that in the formulae (S1), (S2), (S3), (S4), and (S5), at least one Si atom to which a hydroxyl group or a hydrolyzable group is bonded is present.
[9] The laminate according to any one of [2] to [8], wherein α1, β1, and γ1 are each 1.
[10] The laminate according to any one of [2] to [9], wherein X^{A} is a single bond or a divalent organic group represented by the following formula:

   -(R⁵¹)ₚ₅-(X⁵¹)_{q5}-

   wherein
   R⁵¹ is a single bond or - (CH₂)ₛ₅-,
   s5 is an integer of 1 to 20,
   X⁵¹ is - (X⁵²)₁₅-,
   X⁵² each independently represents a group selected from the group consisting of -O-, -S-, -CO-, -NR⁵⁴-, -(CH₂)ₙ₅-, - COO-, -OCO-, -CONR⁵⁴-, -NR⁵⁴CO-, -O-CONR⁵⁴-, -NR⁵⁴CO-O-, - Si(R⁵³)₂-, and - (Si(R⁵³)₂O)ₘ₅-Si(R⁵³)₂-,
   R⁵³ is each independently a phenyl group, a C₁₋₆ alkyl group, or a C₁₋₆ alkoxy group,
   R⁵⁴ is each independently a hydrogen atom, a phenyl group, or a C₁₋₆ alkyl group,
   m5 is each independently an integer of 1 to 100,
   n5 is each independently an integer of 1 to 20,
   l5 is an integer of 1 to 10,
   p5 is 0 or 1, and
   q5 is 0 or 1,
   provided that at least one of p5 and q5 is 1, the occurrence order of the respective repeating units enclosed in parentheses provided with p5 or q5 is not limited, and
   the right side is bonded to R^{Si},
[11] The laminate according to any one of [2] to [8], wherein X^{A} is a group represented by the following formula: 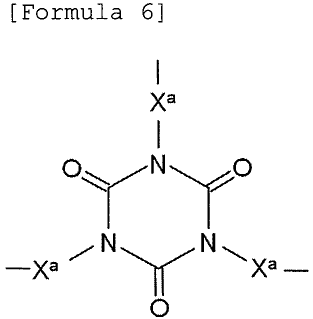 wherein X^{a} is a single bond or a divalent organic group.
[12] The laminate according to any one of [1] to [11], wherein the polysilazane is represented by formula (P) wherein R⁶¹ is a hydrogen atom, R⁶² is a hydrogen atom, and R⁶³ is a hydrogen atom.
[13] The laminate according to any one of [1] to [12], wherein the polysilazane has a number average molecular weight of 1,000 to 10,000.
[14] The laminate according to any one of [1] to [13], wherein the aminosilane is represented by the following formula (Q-1):

   [Formula 7] HN(R⁷¹-SiR⁷²₃)₂

   wherein
   R⁷¹ is each independently a C₁₋₆ alkylene group, and
   R⁷² is each independently a hydrolyzable group.
[15] The laminate according to any one of [1] to [14], wherein the substrate is glass, metal, or ceramic.
[16] An article comprising the laminate according to any one of [1] to [15].
[17] The article according to [16], which is automobile glass, outdoor glass, or a display.

### Advantageous Effect of Invention

According to the present disclosure, a laminate having a surface-treating layer with greater ultraviolet resistance can be provided by disposing an underlayer formed of polysilazane or aminosilane between a substrate and the surface-treating layer.

### Description of Embodiments

The term "monovalent organic group" as used herein refers to a monovalent group containing carbon. The monovalent organic group is not limited, and may be a hydrocarbon group or a derivative thereof. The derivative of a hydrocarbon group refers to a group that has one or more of N, O, S, Si, amide, sulfonyl, siloxane, carbonyl, carbonyloxy, and the like at the terminal or in the molecular chain of the hydrocarbon group. The term simply referred to as an "organic group" means a monovalent organic group. The term "divalent organic group" refers to a divalent group containing carbon. Such a divalent organic group may be, for example, a divalent group obtained by further removing one hydrogen atom from an organic group. The trivalent or higher organic group similarly refers to a group obtained by removing a predetermined number of hydrogen atoms from an organic group.

The term "hydrocarbon group", as used herein, refers to a group that contains carbon and hydrogen and that is obtained by removing a hydrogen atom from a hydrocarbon. Such a hydrocarbon group is not limited, and examples include C₁₋₂₀ hydrocarbon groups such as an aliphatic hydrocarbon group and an aromatic hydrocarbon group. The above "aliphatic hydrocarbon group" may be either linear, branched, or cyclic, and may be either saturated or unsaturated. The hydrocarbon group may contain one or more ring structures. The hydrocarbon group may be substituted with one or more substituents.

The substituent of the "hydrocarbon group" as used herein is not limited, and examples include a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group, each of which is optionally substituted with one or more halogen atoms.

The term "hydrolyzable group" as used herein refers to a group capable of undergoing a hydrolysis reaction, i.e., refers to a group that can be eliminated from the main backbone of a compound by a hydrolysis reaction. Examples of the hydrolyzable group include -OR^{j}, -OCOR^{j}, -O-N=CR^{j}₂, - NR^{j}₂, -NHR^{j}, -NCO, and a halogen (in these formulae, R^{j} represents a substituted or unsubstituted alkyl group having 1 to 4 carbon atoms), and -OR^{j} (that is, an alkoxy group) is preferable. Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable.

### (Laminate)

The laminate of the present disclosure comprises a substrate, an underlayer disposed on the substrate, and a surface-treating layer disposed on the underlayer. The underlayer is a layer formed of:
(A) polysilazane represented by the following formula (P): 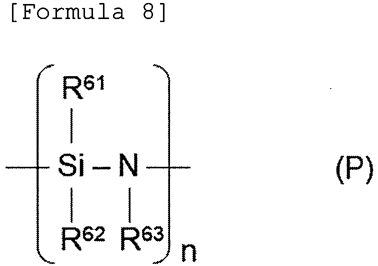 wherein
   R⁶¹ is a hydrogen atom or a C₁₋₆ alkyl group,
   R⁶² is a hydrogen atom, a C₁₋₆ alkyl group, or a group having a functional group,
   R⁶³ is a hydrogen atom, a C₁₋₆ alkyl group, or a group having a functional group, and
   n is an integer of 2 to 100; or
(B) aminosilane represented by the following formula (Q):
   [Formula 9]

   N(R⁷¹-SiR⁷²₃)ₘR⁷³₃₋ₘ (Q)

   wherein
   R⁷¹ is each independently a C₁₋₆ alkylene group,
   R⁷² is each independently a hydrolyzable group,
   R⁷³ is a hydrogen atom or a C₁₋₆ alkyl group, and
   m is 2 or 3.
   The surface-treating layer is a layer formed of a fluorine-containing silane compound.

The laminate of the present disclosure has the underlayer formed of polysilazane represented by formula (A) or aminosilane represented by formula (B) between the substrate and the surface-treating layer, and accordingly the ultraviolet resistance of the surface-treating layer is increased. The friction durability of the surface-treating layer can be increased as well.

### (Substrate)

The material constituting the substrate used in the laminate of the present disclosure is not limited, and is selected from the group consisting of, for example, resin, metal, metal oxide, ceramic, and glass. The material constituting the substrate is preferably metal, ceramic, or glass, and is more preferably glass.

The resin is not limited, and examples include acrylic resin, polycarbonate resin, ABS (acrylonitrile-butadienestyrene) resin, polyester resin, polyimide resin, polyamide resin, and polyolefin resin.

The metal is not limited, and examples include aluminum, copper, iron, stainless steel, and alloy thereof.

The metal oxide is not limited, and examples include ITO (indium tin oxide) and anodized aluminum.

The ceramic is not limited, and examples include aluminum oxide, silicon oxide, and zirconium.

Glass is not limited, and is preferably, for example, soda-lime glass, alkali aluminosilicate glass, borosilicate glass, alkali-free glass, crystal glass, or quartz glass, including chemically strengthened soda-lime glass, chemically strengthened alkali aluminosilicate glass, and chemically bonded borosilicate glass.

The form of the substrate is not limited, and the substrate may be, for example, a film or a plate.

### (Polysilazane)

Polysilazane used in the formation of the underlayer of the laminate of the present disclosure is represented by the following formula (P): 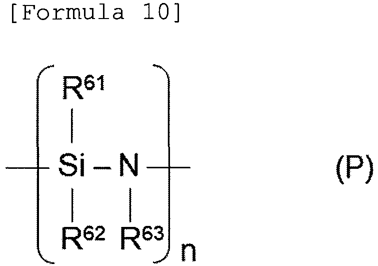 wherein
R⁶¹ is a hydrogen atom or a C₁₋₆ alkyl group,
R⁶² is a hydrogen atom, a C₁₋₆ alkyl group, or a group having a functional group,
R⁶³ is a hydrogen atom, a C₁₋₆ alkyl group, or a group having a functional group, and
n is an integer of 2 to 100.

In one embodiment, R⁶¹ is a hydrogen atom.

In another embodiment, R⁶¹ is a C₁₋₆ alkyl group.

In one embodiment, R⁶² is a hydrogen atom.

In another embodiment, R⁶² is a C₁₋₆ alkyl group.

In another embodiment, R⁶² is a group having a functional group.

In one embodiment, R⁶³ is a hydrogen atom.

In another embodiment, R⁶³ is a C₁₋₆ alkyl group.

In another embodiment, R⁶³ is a group having a functional group.

The C₁₋₆ alkyl group may be linear or may be branched. The C₁₋₆ alkyl group is preferably linear.

The C₁₋₆ alkyl group is preferably a C₁₋₄ alkyl group, more preferably a methyl group or an ethyl group, and even more preferably a methyl group.

The group having the functional group is preferably - R⁶⁴-R⁶⁵. R⁶⁴ is a single bond or a divalent organic group, and R⁶⁵ is a functional group.

The divalent organic group of R⁶⁴ is preferably a C₁₋₆ alkyl group.

The functional group is preferably a carbonyl group, a carboxyl group, or a hydroxyl group.

In one embodiment, R⁶¹ is a hydrogen atom or a C₁₋₆ alkyl group, R⁶² is a hydrogen atom or a C₁₋₆ alkyl group, and R⁶³ is a hydrogen atom.

In a preferable embodiment, R⁶¹ is a hydrogen atom or a C₁₋₆ alkyl group, R⁶² is a hydrogen atom, and R⁶³ is a hydrogen atom.

In a more preferable embodiment, R⁶¹ is a hydrogen atom, R⁶² is a hydrogen atom, and R⁶³ is a hydrogen atom.

n is preferably an integer of 5 to 80, and more preferably an integer of 10 to 50.

The number average molecular weight of the polysilazane is preferably 1,000 to 10,000, more preferably 2,000 to 8,000, and even more preferably 3,000 to 6,000.

The number average molecular weight of the polysilazane can be determined by GPC (gel permeation chromatography).

The underlayer formed of the polysilazane can be formed by treating the substrate surface with a composition (A) containing polysilazane. For example, the underlayer can be obtained by applying the composition (A) to the substrate to form a film of the composition (A), and leaving the film to stand still or subjecting the film to a heat treatment to cure the film of the composition (A).

The composition (A) may contain a solvent.

Examples of the solvent include cyclic ethers such as THF (tetrahydrofuran), tetrahydropyran, and dioxane; acyclic ethers such as diethyl ether, diisopropyl ether, dibutyl ether, monoglyme, diglyme, and triglyme; aromatic compounds such as HMPA (hexamethylphosphamide), DMPU (dimethylpropylene), TMEDA (tetramethylethylenediamine), toluene, xylene, and benzotrifluoride; amides such as N,N-dimethylformamide, N,N-dimethylacetamide, and N-methylpyrrolidone; and mixtures thereof.

The concentration of polysilazane in the composition (A) may be preferably 0.1% by mass to 20% by mass, more preferably 0.2% by mass to 10% by mass, and even more preferably 0.5% by mass to 5% by mass, based on the entirety of the composition.

The composition (A) may contain a catalyst.

Examples of the catalyst include acids (such as acetic acid and trifluoroacetic acid), bases (such as ammonia, triethylamine, and diethylamine), transition metals (such as Ti, Ni, and Sn), and metal chelates (such as tris(2,4-pentanedionato)aluminum(III)).

The polysilazane may be a commercially available product or a synthesized product. For example, the composition (A) may be of the Durazane(R) series.

The film of the composition (A) can be formed by applying the composition (A) to the substrate surface so as to coat the surface.

The coating method is not limited, and examples include dip coating, spin coating, flow coating, spray coating, roll coating, gravure coating, and similar methods.

The time for leaving the film to stand still may be, for example, 1 minute to 12 hours and preferably 5 minutes to 5 hours at room temperature.

The temperature of the heat treatment may be, for example, 50°C to 500°C and preferably 100°C to 300°C. The heating time may be, for example, 1 minute to 6 hours and preferably 5 minutes to 3 hours.

### (Aminosilane)

Aminosilane used in the formation of the underlayer of the laminate of the present disclosure is represented by the following formula (Q):

[Formula 11] N(R⁷¹-SiR⁷²₃)ₘR⁷³₃₋ₘ

wherein
R⁷¹ is each independently a C₁₋₆ alkylene group,
R⁷² is each independently a hydrolyzable group,
R⁷³ is a hydrogen atom or a C₁₋₆ alkyl group, and
m is 2 or 3.

The C₁₋₆ alkylene group may be linear or may be branched. The C₁₋₆ alkylene group is preferably linear.

The C₁₋₆ alkylene group is preferably a C₂₋₆ alkylene group, and more preferably a C₂₋₄ alkylene group.

R⁷² is preferably -OR^{j}, wherein R^{j} is a substituted or unsubstituted alkyl group having 1 to 4 carbon atoms. R⁷² is preferably -OCH₃ or -OC₂H₅, more preferably -OCH₃.

In one embodiment, R⁷³ is a hydrogen atom.

In one embodiment, R⁷³ is a C₁₋₆ alkyl group.

The C₁₋₆ alkyl group of R⁷³ may be linear or may be branched. The C₁₋₆ alkyl group is preferably linear.

The C₁₋₆ alkyl group of R⁷³ is preferably a C₁₋₄ alkyl group, more preferably a methyl group or an ethyl group, and even more preferably a methyl group.

m is preferably 2.

In a preferable embodiment, aminosilane is a compound represented by the following formula (Q-1):

[Formula 12] HN(R⁷¹-SiR⁷²₃)₂

wherein
R⁷¹ is each independently a C₁₋₆ alkylene group, preferably a C₂₋₆ alkylene group, and more preferably a C₂₋₄ alkylene group, and
R⁷² is each independently a hydrolyzable group, preferably -OR^{j} (wherein R^{j} is a substituted or unsubstituted alkyl group having 1 to 4 carbon atoms), more preferably - OCH₃ or -OC₂H₅, and even more preferably -OCH₃.

The underlayer formed of aminosilane can be formed by treating the substrate surface with a composition (B) containing aminosilane. For example, the underlayer can be obtained by applying the composition (B) to the substrate to form a film of the composition (B).

The composition (B) may contain a solvent.

Examples of the solvent include cyclic ethers such as THF (tetrahydrofuran), tetrahydropyran, and dioxane; acyclic ethers such as diethyl ether, diisopropyl ether, dibutyl ether, monoglyme, diglyme, and triglyme; aromatic compounds such as HMPA (hexamethylphosphamide), DMPU (dimethylpropylene), TMEDA (tetramethylethylenediamine), toluene, xylene, and benzotrifluoride; amides such as N,N-dimethylformamide, N,N-dimethylacetamide, and N-methylpyrrolidone; and mixtures thereof.

The concentration of aminosilane in the composition (B) may be preferably 0.1% by mass to 20% by mass, more preferably 0.2% by mass to 10% by mass, and even more preferably 0.5% by mass to 5% by mass, based on the entirety of the composition.

The composition (B) may contain a catalyst.

Examples of the catalyst include acids (such as acetic acid and trifluoroacetic acid), bases (such as ammonia, triethylamine, and diethylamino), and transition metals (such as Ti, Ni, and Sn).

The film of the composition (B) can be formed by applying the composition (B) to the substrate surface so as to coat the surface.

The coating method is not limited, and examples include dip coating, spin coating, flow coating, spray coating, roll coating, gravure coating, and similar methods.

The formed film is preferably left to stand still at room temperature for, for example, 1 minute to 12 hours and preferably 5 minutes to 5 hours.

### (Fluorine-containing silane compound)

The fluorine-containing silane compound used in the formation of the surface-treating layer of the laminate of the present disclosure is a compound containing a fluorine-containing group and a hydrolyzable silane group.

In one embodiment, the fluorine-containing silane compound is a fluorine-containing silane compound represented by the following formula (A1) or (A2):
[Formula 13]

R^{F1}_{α1}-X^{A}-R^{Si}**_{β1}** (Al)

R^{Si}_{γ1}-X^{A}-R^{F2}-X^{A}-R^{Si}_{γ1} (A2)

wherein
R^{F1} is each independently Rf¹- or Rf¹-R^{F}-O_{q}-,
R^{F2} is -R^{f2}- or -Rf²ₚ-R^{F}-O_{q}-,
R^{F} is each independently a divalent fluoropolyether group,
Rf¹ is each independently a C₁₋₁₆ alkyl group optionally substituted with one or more fluorine atoms,
Rf² is a C₁₋₆ alkylene group optionally substituted with one or more fluorine atoms,
p is 0 or 1,
q is each independently 0 or 1,
R^{Si} is each independently a monovalent group containing a Si atom to which a hydroxyl group, a hydrolyzable group, a hydrogen atom, or a monovalent organic group is bonded,
at least one R^{Si} is a monovalent group containing a Si atom to which a hydroxyl group or a hydrolyzable group is bonded,
X^{A} is each independently a single bond or a di- to decavalent organic group,
α1 is an integer of 1 to 9,
β1 is an integer of 1 to 9, and
γ1 is each independently an integer of 1 to 9.

In the formula (A1), R^{F1} is each independently Rf¹- or Rf¹-R^{F}-O_{q}-.

In a preferable embodiment, R^{F1} is each independently Rf¹-R^{F}-O_{q}-.

In the formula (A2), R^{F2} is -Rf²- or -Rf²ₚ-R^{F}-O_{q}-.

In a preferable embodiment, R^{F2} is -Rf²ₚ-R^{F}-O_{q}-.

In the formula, Rf¹ is each independently a C₁₋₁₆ alkyl group optionally substituted with one or more fluorine atoms.

In the C₁₋₁₆ alkyl group optionally substituted with one or more fluorine atoms, the "C₁₋₁₆ alkyl group" may be linear or branched, and is preferably a linear or branched C₁₋₆ alkyl group, in particular C₁₋₃ alkyl group, and more preferably a linear C₁₋₆ alkyl group, in particular C₁₋₃ alkyl group.

Rf¹ is preferably a C₁₋₁₆ alkyl group substituted with one or more fluorine atoms, more preferably a CF₂H-C₁₋₁₅ perfluoroalkylene group, and even more preferably a C₁₋₁₆ perfluoroalkyl group.

The C₁₋₁₆ perfluoroalkyl group may be linear or branched, and is preferably a linear or branched C₁₋₆ perfluoroalkyl group, in particular C₁₋₃ perfluoroalkyl group, more preferably a linear C₁₋₆ perfluoroalkyl group, in particular C₁₋₃ perfluoroalkyl group, and specifically -CF₃, -CF₂CF₃, or -CF₂CF₂CF₃

In the above formula, Rf² is a C₁₋₆ alkylene group optionally substituted with one or more fluorine atoms.

In the C₁₋₆ alkylene group optionally substituted with one or more fluorine atoms, the "C₁₋₆ alkylene group" may be linear or branched, and is preferably a linear or branched C₁₋₃ alkylene group, and more preferably a linear C₁₋₃ alkylene group.

Rf² is preferably a C₁₋₆ alkylene group substituted with one or more fluorine atoms, more preferably a C₁₋₆ perfluoroalkylene group, and even more preferably a C₁₋₃ perfluoroalkylene group.

The C₁₋₆ perfluoroalkylene group may be linear or branched, and is preferably a linear or branched C₁₋₃ perfluoroalkylene group, more preferably a linear C₁₋₃ perfluoroalkylene group, and specifically -CF₂-, -CF₂CF₂-, or -CF₂CF₂CF₂-.

In the above formulae, p is 0 or 1. In one embodiment, p is 0. In another embodiment, p is 1.

In the above formulae, q is each independently 0 or 1. In one embodiment, q is 0. In another embodiment, q is 1.

In the formulae (A1) and (A2), R^{F} is each independently a divalent fluoropolyether group.

R^{F} is preferably a group represented by the following formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein
R^{Fa} is each independently a hydrogen atom, a fluorine atom, or a chlorine atom;
a, b, c, d, e, and f are each independently an integer of 0 to 200, and the sum of a, b, c, d, e, and f is 1 or more; and the occurrence order of the respective repeating units enclosed in parentheses provided with a, b, c, d, e, or f is not limited in the formula; provided that when all R^{Fa} groups are hydrogen atoms or chlorine atoms, at least one of a, b, c, e, and f is 1 or more.

R^{Fa} is preferably a hydrogen atom or a fluorine atom, and more preferably a fluorine atom, provided that when all R^{Fa} groups are hydrogen atoms or chlorine atoms, at least one of a, b, c, e, and f is 1 or more.

a, b, c, d, e, and f may be preferably each independently an integer of 0 to 100.

The sum of a, b, c, d, e, and f is preferably 5 or more, is more preferably 10 or more, and may be, for example, 15 or more or 20 or more. The sum of a, b, c, d, e, and f is preferably 200 or less, is more preferably 100 or less, is even more preferably 60 or less, and may be, for example, 50 or less or 30 or less.

These repeating units may be linear or branched, and may contain a ring structure. For example, -(OC₆F₁₂)- may be -(OCF₂CF₂CF₂CF₂CF₂CF₂)-, - (OCF(CF₃)CF₂CF₂CF₂CF₂)-, - (OCF₂CF(CF₃)CF₂CF₂CF₂)-, - (OCF₂CF₂CF(CF₃)CF₂CF₂)-, - (OCF₂CF₂CF₂CF(CF₃)CF₂)-, - (OCF₂CF₂CF₂CF₂CF(CF₃)) -, or the like. - (OC₅F₁₀)- may be -(OCF₂CF₂CF₂CF₂CF₂)-, - (OCF (CF₃)CF₂CF₂CF₂)-, - (OCF₂CF(CF₃)CF₂CF₂)-, - (OCF₂CF₂CF(CF₃)CF₂)-, - (OCF₂CF₂CF₂CF(CF₃)) -, or the like. - (OC₄F₈)- may be any of - (OCF₂CF₂CF₂CF₂)-, - (OCF (CF₃)CF₂CF₂)-, - (OCF₂CF(CF₃)CF₂)-, - (OCF₂CF₂CF(CF₃)) -, - (OC (CF₃)2CF₂)-, - (OCF₂C(CF₃)₂)-, - (OCF (CF₃)CF (CF₃)) -, - (OCF(C₂F₅)CF₂)-, and - (OCF₂CF(C₂F₅))-. - (OC₃F₆)- (that is, in the above formula, R^{Fa} is a fluorine atom) may be any of -(OCF₂CF₂CF₂)-, -(OCF(CF₃)CF₂)-, and - (OCF₂CF(CF₃))-. -(OC₂F₄)- may be any of -(OCF₂CF₂)- and - (OCF(CF₃))-.

The ring structure may be any of the following 3-membered ring, 4-membered rings, 5-membered rings, and 6-membered rings: 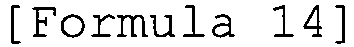 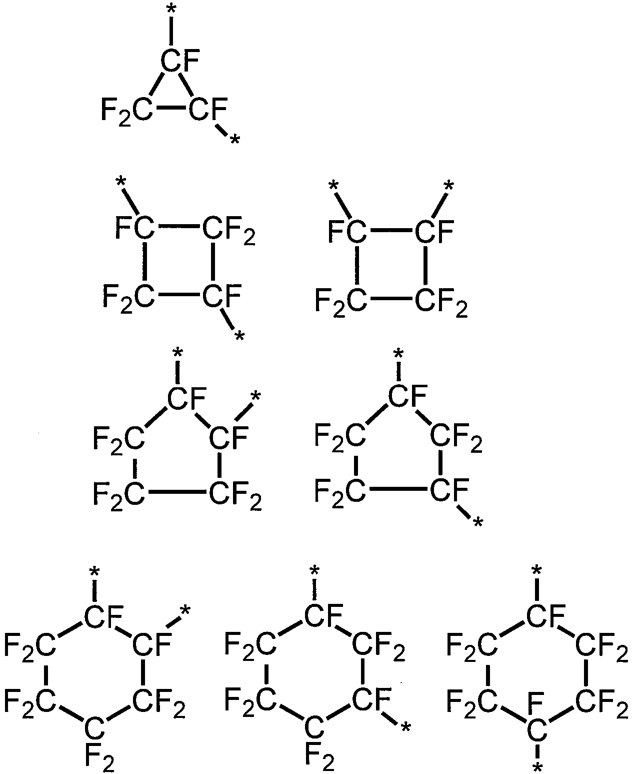 wherein * represents a bond position.

The ring structure may be preferably a 4-membered ring, a 5-membered ring, or a 6-membered ring, and more preferably a 4-membered ring or a 6-membered ring.

The repeating units having a ring structure may be preferably any of the following units: 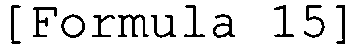 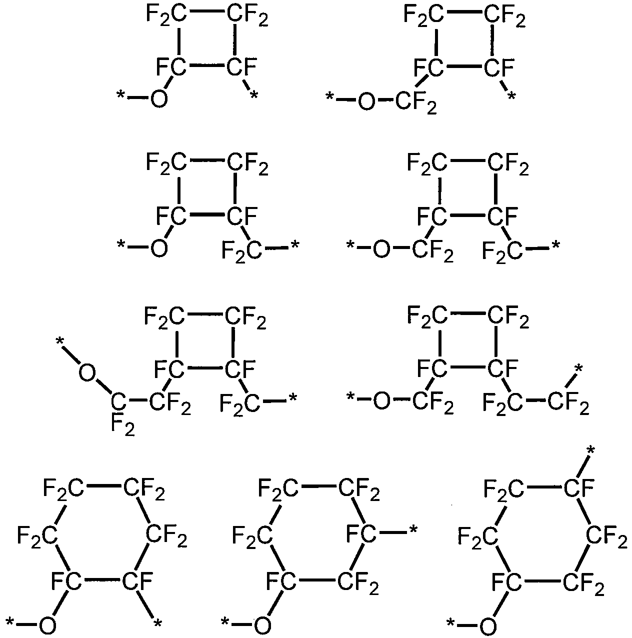 wherein * represents a bond position.

In one embodiment, the above repeating units are linear. When the above repeating units are linear, the surface lubricity, friction durability, and the like of the surface-treating layer can be increased.

In one embodiment, the repeating units are branched. When the repeating units are branched, the dynamic friction coefficient of the surface-treating layer can be increased.

In one embodiment, R^{F} is each independently a group represented by any of the following formulae (f1) to (f6):

-(OC₃F₆)_{d}-(OC₂F₄)ₑ- (f1)

wherein d is an integer of 1 to 200, and e is 0 or 1;

- (OC₄F₈)_{c}-(OC₃F₆)_{d}-(OC₂F₄)ₑ-(OCF₂)_{f}- (f2)

wherein c and d are each independently an integer of 0 or more and 30 or less, and e and f are each independently an integer of 1 or more and 200 or less,
the sum of c, d, e, and f is 2 or more, and
the occurrence order of the respective repeating units enclosed in parentheses provided with the subscript c, d, e, or f is not limited in the formula;

   - (R⁶-R⁷)_{g}- (f3)

   wherein R⁶ is OCF₂ or OC₂F₄,
R⁷ is a group selected from OC₂F₄, OC₃F₆, OC₄F₈, OC₅F₁₀, and OC₆F₁₂, or is a combination of two or three groups independently selected from these groups, and
g is an integer of 2 to 100;

   -(R⁶-R⁷)_{g}-R^{r}-(R^{7'}-R^{6'})_{g'}- (f4)

   wherein R⁶ is OCF₂ or OC₂F₄,
R⁷ is a group selected from OC₂F₄, OC₃F₆, OC₄F₈, OC₅F₁₀, and OC₆F₁₂, or is a combination of two or three groups independently selected from these groups,
R^{6'} is OCF₂ or OC₂F₄,
R^{7'} is a group selected from OC₂F₄, OC₃F₆, OC₄F₈, OC₅F₁₀, and OC₆F₁₂, or is a combination of two or three groups independently selected from these groups,
g is an integer of 2 to 100,
g' is an integer of 2 to 100, and
R^{r} is any of: 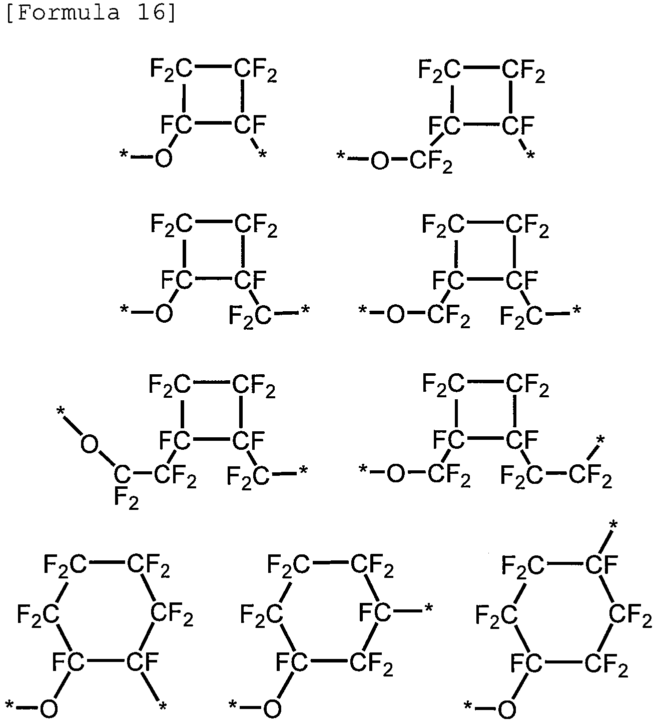 wherein * represents a bond position;

   -(OC₆F₁₂)ₐ-(OC₅F₁₀)_{b}-(OC₄F₈)_{c}-(OC3F6)_{d}-(OC₂F₄)ₑ-(OCF₂)_{f}- (f5)

   wherein e is an integer of 1 or more and 200 or less; a, b, c, d, and f are each independently an integer of 0 or more and 200 or less; and the occurrence order of the respective repeating units enclosed in parentheses provided with a, b, c, d, e, or f is not limited in the formula; and

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)

   wherein f is an integer of 1 or more and 200 or less; a, b, c, d, and e are each independently an integer of 0 or more and 200 or less; and the occurrence order of the respective repeating units enclosed in parentheses provided with a, b, c, d, e, or f is not limited in the formula.

In the formula (f1), d is an integer of preferably 5 to 200, more preferably 10 to 100, and even more preferably 15 to 50, such as 25 to 35. In one embodiment, e is 1. In another embodiment, e is 0. In the above formula (f1), (OC₃F₆) is preferably a group represented by (OCF₂CF₂CF₂), (OCF₂CF(CF₃)), or (OCF (CF₃)CF₂), and is more preferably a group represented by -(OCF₂CF₂CF₂)_{d}-. In the above formula (f1), (OC₂F₄) is preferably a group represented by (OCF₂CF₂) or (OCF(CF₃)), and is more preferably a group represented by (OCF₂CF₂).

In the above formula (f2), e and f are each independently an integer of preferably 5 to 200, and more preferably 10 to 200. The sum of c, d, e, and f is preferably 5 or more, is more preferably 10 or more, and may be, for example, 15 or more or 20 or more. In one embodiment, the above formula (f2) is preferably a group represented by - (OCF₂CF₂CF₂CF₂)_{c}-(OCF₂CF₂CF₂)_{d}-(OCF₂CF₂)ₑ-(OCF₂)_{f}-. In another embodiment, the formula (f2) may be a group represented by - (OC₂F₄)ₑ-(OCF₂)_{f}-.

In the above formula (f3), R⁶ is preferably OC₂F₄. In the above (f3), R⁷ is preferably a group selected from OC₂F₄, OC₃F₆, and OC₄F₈, or a combination of two or three groups independently selected from these groups, and more preferably a group selected from OC₃F₆ and OC₄F₈. The combination of two or three groups independently selected from OC₂F₄, OC₃F₆, and OC₄F₈ is not limited, and examples include -OC₂F₄OC₃F₆-, -OC₂F₄OC₄F₈-, -OC₃F₆OC₂F₄-, -OC₃F₆OC₃F₆-, - OC₃F₆OC₄F₈-, -OC₄F₈OC₄F₈-, -OC₄F₈OC₃F₆-, -OC₄F₈OC₂F₄-, - OC₂F₄OC₂F₄OC₃F₆-, -OC₂F₄OC₂F₄OC₄F₈-, -OC₂F₄OC₃F₆OC₂F₄-, - OC₂F₄OC₃F₆OC₃F₆-, -OC₂F₄OC₄F₈OC₂F₄-, -OC₃F₆OC₂F₄OC₂F₄-, - OC₃F₆OC₂F₄OC₃F₆-, -OC₃F₆OC₃F₆OC₂F₄-, and -OC₄F₈OC₂F₄OC₂F₄-. In the above formula (f3), g is an integer of preferably 3 or more, and more preferably 5 or more. g is preferably an integer of 50 or less. In the above formula (f3), OC₂F₄, OC₃F₆, OC₄F₈, OC₅F₁₀, and OC₆F₁₂ may be either linear or branched, and are preferably linear. In this embodiment, the above formula (f3) is preferably -(OC₂F₄OC₃F₆)_{g}-, or - (OC₂F₄-OC₄F₈)_{g}-.

In the formula (f4), R⁶, R⁷, and g have the same meanings as those described for the above formula (f3), and have the same embodiments. R^{6'}, R^{7'}, and g' have the same meanings as those of R⁶, R⁷, and g set forth in the above formula (f3), respectively, and have the same embodiments. R^{r} is preferably: 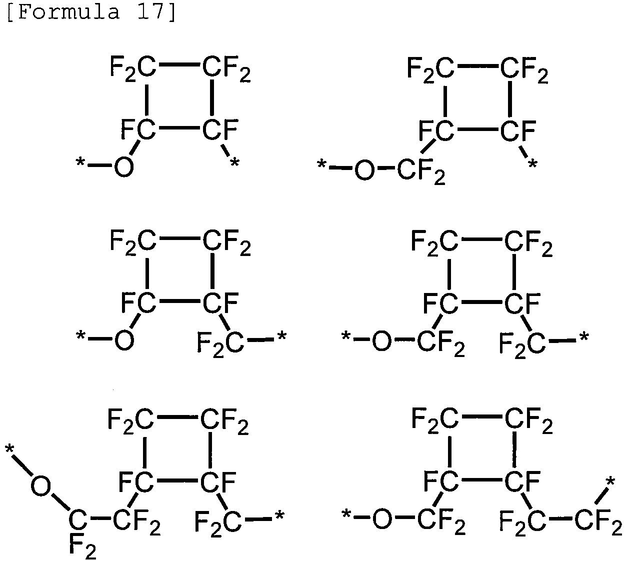 wherein * represents a bond position, and
more preferably 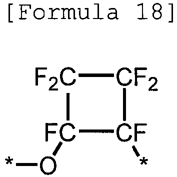 wherein * represents a bond position.

In the above formula (f5), e is an integer of preferably 1 or more and 100 or less, and more preferably 5 or more and 100 or less. The sum of a, b, c, d, e, and f is preferably 5 or more, is more preferably 10 or more, and is, for example, 10 or more and 100 or less.

In the above formula (f6), f is an integer of preferably 1 or more and 100 or less, and more preferably 5 or more and 100 or less. The sum of a, b, c, d, e, and f is preferably 5 or more, is more preferably 10 or more, and is, for example, 10 or more and 100 or less.

In one embodiment, R^{F} is a group represented by the above formula (f1) or (f2).

In one embodiment, R^{F} is a group represented by the above formula (f1).

In one embodiment, R^{F} is a group represented by the above formula (f2).

In one embodiment, R^{F} is a group represented by the above formula (f3) or (f4).

In one embodiment, R^{F} is a group represented by the above formula (f3).

In one embodiment, R^{F} is a group represented by the above formula (f4).

In one embodiment, R^{F} is a group represented by the above formula (f5).

In one embodiment, R^{F} is a group represented by the above formula (f6).

In R^{F}, the ratio of e to f (hereinafter referred to as the "e/f ratio") is 0.1 to 10, preferably 0.2 to 5, more preferably 0.2 to 2, even more preferably 0.2 to 1.5, and yet more preferably 0.2 to 0.85. With an e/f ratio of 10 or less, the lubricity, friction durability, and chemical resistance (such as durability against artificial sweat) of the surface-treating layer obtained from this compound are more increased. The lower the e/f ratio is, the more increased the lubricity and the friction durability of the surface-treating layer are. On the other hand, with an e/f ratio of 0.1 or more, the stability of the compound can be more enhanced. The higher the e/f ratio is, the more increased the stability of the compound is.

In one embodiment, the e/f ratio is preferably 0.2 to 0.95, and more preferably 0.2 to 0.9.

In one embodiment, from the viewpoint of heat resistance, the e/f ratio is preferably 1.0 or more, and more preferably 1.0 to 2.0.

In the fluorine-containing silane compound, the number average molecular weight of the R^{F1} and R^{F2} moieties is not limited, and is, for example, 500 to 30,000, preferably 1,500 to 30,000, and more preferably 2,000 to 10,000. Herein, the number average molecular weight of R^{F1} and R^{F2} is a value obtained by ¹⁹F-NMR measurement.

In another embodiment, the number average molecular weight of the R^{F1} and R^{F2} moieties is 500 to 30,000, preferably 1,000 to 20,000, more preferably 2,000 to 15,000, and even more preferably 2,000 to 10,000, and may be, for example, 3,000 to 6,000.

In another embodiment, the number average molecular weight of the R^{F1} and R^{F2} moieties may be 4,000 to 30,000, preferably 5,000 to 10,000, and more preferably 6,000 to 10,000.

In the above formulae (A1) and (A2), R^{Si} is each independently a monovalent group containing a Si atom to which a hydroxyl group, a hydrolyzable group, a hydrogen atom, or a monovalent organic group is bonded, and at least one R^{Si} is a monovalent group containing a Si atom to which a hydroxyl group or a hydrolyzable group is bonded.

In a preferable embodiment, R^{Si} is a monovalent group containing a Si atom to which a hydroxyl group or a hydrolyzable group is bonded, and more preferably a monovalent group containing a Si atom to which a hydrolyzable group is bonded.

In a preferable embodiment, R^{Si} is a group represented by the following formula (S1), (S2), (S3), (S4), or (S5):

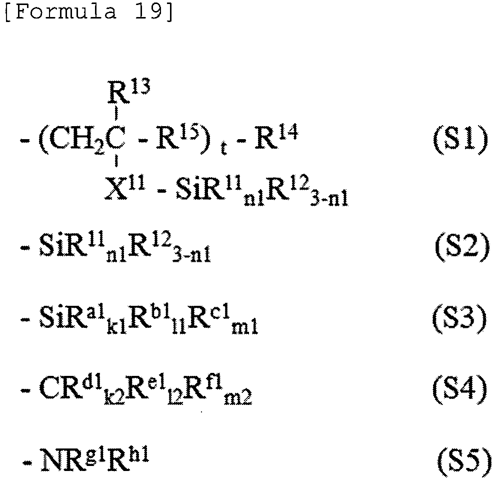

In the above formulae, R¹¹ is each independently a hydroxyl group or a hydrolyzable group.

R¹¹ is preferably each independently a hydrolyzable group.

R¹¹ is preferably each independently -OR^{j}, -OCOR^{j}, -ON=CR^{j}₂, -NR^{j}₂, -NHR^{j}, -NCO, or a halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{j} is a methyl group, and in another embodiment, R^{j} is an ethyl group.

In the above formulae, R¹² is each independently a hydrogen atom or a monovalent organic group. Such a monovalent organic group is a monovalent organic group excluding the above hydrolyzable group.

In R¹², the monovalent organic group is preferably a C₁₋₂₀ alkyl group, more preferably a C₁₋₆ alkyl group, and even more preferably a methyl group.

In the above formulae, n1 is each independently an integer of 0 to 3 for each (SiR¹¹ₙ₁R¹²₃₋ₙ₁) unit. However, when R^{Si} is a group represented by the formula (S1) or (S2), the R^{Si} moiety at the terminal of the formula (A1) and the formula (A2) (hereinafter, also referred to simply as the "terminal moiety" of the formula (A1) and the formula (A2)) has at least one (SiR¹¹ₙ₁R¹²₃₋ₙ₁) unit wherein n1 is 1 to 3. That is, in such terminal moieties, not all n1 are 0 at the same time. In other words, in the terminal moieties of the formula (A1) and the formula (A2), at least one Si atom to which a hydroxyl group or a hydrolyzable group is bonded is present.

n1 is each independently an integer of preferably 1 to 3, more preferably 2 to 3, and even more preferably 3 for each (SiR¹¹_{n1R}¹²₃₋ₙ₁) unit .

In the above formulae, X¹¹ is each independently a single bond or a divalent organic group. Such a divalent organic group is preferably -R²⁸-Oₓ-R²⁹- (wherein R²⁸ and R²⁹ are each independently a single bond or a C₁₋₂₀ alkylene group, and x is 0 or 1). Such a C₁₋₂₀ alkylene group may be linear or may be branched, and is preferably linear. Such a C₁₋₂₀ alkylene group is preferably a C₁₋₁₀ alkylene group, more preferably a C₁₋₆ alkylene group, and even more preferably a C₁₋₃ alkylene group.

In one embodiment, X¹¹ is each independently -C₁₋₆ alkylene-O-C₁₋₆ alkylene- or -O-C₁₋₆ alkylene-.

In a preferable embodiment, X¹¹ is each independently a single bond or a linear C₁₋₆ alkylene group, preferably a single bond or a linear C₁₋₃ alkylene group, more preferably a single bond or a linear C₁₋₂ alkylene group, and even more preferably a linear C₁₋₂ alkylene group.

In the above formulae, R¹³ is each independently a hydrogen atom or a monovalent organic group. Such a monovalent organic group is preferably a C₁₋₂₀ alkyl group. Such a C₁₋₂₀ alkyl group may be linear or branched, and is preferably linear.

In a preferable embodiment, R¹³ is each independently a hydrogen atom or a linear C₁₋₆ alkyl group, preferably a hydrogen atom or a linear C₁₋₃ alkyl group, and preferably a hydrogen atom or a methyl group.

In the above formulae, t is each independently an integer of 2 or more.

In a preferable embodiment, t is each independently an integer of 2 to 10, and preferably an integer of 2 to 6.

In the above formulae, R¹⁴ is each independently a hydrogen atom, a halogen atom, or -X¹¹-SiR¹¹ₙ₁R¹²₃₋ₙ₁. Such a halogen atom is preferably an iodine atom, a chlorine atom, or a fluorine atom, and more preferably a fluorine atom. In a preferable embodiment, R¹⁴ is a hydrogen atom.

In the above formulae, R¹⁵ is each independently at each occurrence a single bond, an oxygen atom, an alkylene group having 1 to 6 carbon atoms, or an alkyleneoxy group having 1 to 6 carbon atoms.

In one embodiment, R¹⁵ is each independently at each occurrence an oxygen atom, an alkylene group having 1 to 6 carbon atoms, or an alkyleneoxy group having 1 to 6 carbon atoms.

In a preferable embodiment, R¹⁵ is a single bond.

In one embodiment, the formula (S1) is the following formula (S1-a): 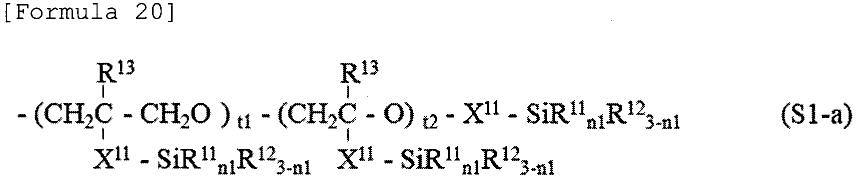 wherein
R¹¹, R¹², R¹³, X¹¹, and n1 have the same meanings as those described for the above formula (S1),
t1 and t2 are each independently an integer of 1 or more, preferably an integer of 1 to 10, and more preferably an integer of 2 to 10, such as an integer of 1 to 5 or an integer of 2 to 5, and
the occurrence order of the respective repeating units enclosed in parentheses provided with t1 and t2 is not limited in the formula.

In a preferable embodiment, the formula (S1) is the following formula (S1-b): 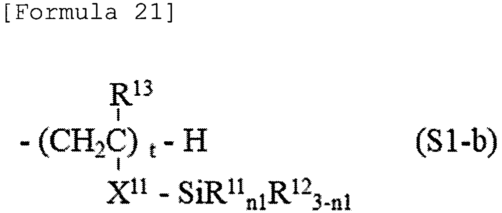 wherein R¹¹, R¹², R¹³, X¹¹, n1, and t have the same meanings as those described for the above formula (S1).

In the above formula, R^{a1} is each independently -Z¹-SiR²¹ₚ₁R²²_{q1}R²³ᵣ₁.

Z¹ is each independently an oxygen atom or a divalent organic group. Below, the structure denoted as Z¹ is bonded to (SiR²¹ₚ₁R²²_{q1}R²³ᵣ₁) on the right side.

In a preferable embodiment, Z¹ is a divalent organic group.

In a preferable embodiment, Z¹ does not include a group that forms a siloxane bond with the Si atom to which Z¹ is bonded. Preferably, in the formula (S3), (Si-Z¹-Si) does not contain a siloxane bond.

Z¹ is preferably a C₁₋₆ alkylene group, - (CH₂)_{z1}-O-(CH₂)_{z2}-(wherein z1 is an integer of 0 to 6 such as an integer of 1 to 6, and z2 is an integer of 0 to 6 such as an integer of 1 to 6), or - (CH₂)_{z3}-phenylene-(CH₂)_{z4}- (wherein z3 is an integer of 0 to 6 such as an integer of 1 to 6, and z4 is an integer of 0 to 6 such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z¹ is a C₁₋₆ alkylene group or -(CH₂)_{z3}-phenylene-(CH₂)_{z4}-, and preferably -phenylene-(CH₂)_{z4}-. When Z¹ is such a group, light resistance, in particular ultraviolet resistance, can be further enhanced.

In another preferable embodiment, Z¹ is a C₁₋₃ alkylene group. In one embodiment, Z¹ may be -CH₂CH₂CH₂-. In another embodiment, Z¹ may be -CH₂CH₂-.

R²¹ is each independently -Z^{1'}-SiR^{21'}_{p1'}R^{22'}_{q1'}R^{23'}_{r1'}.

Z^{1'} is each independently an oxygen atom or a divalent organic group. Below, the structure denoted as Z^{1'} is bonded to (SiR^{21'}_{p1'}R^{22'}_{q1'}R^{23'}_{r1'}) on the right side.

In a preferable embodiment, Z^{1'} is a divalent organic group.

In a preferable embodiment, Z^{1'} does not include a group that forms a siloxane bond with the Si atom to which Z^{1'} is bonded. Preferably, in the formula (S3), (Si-Z^{1'}-Si) does not contain a siloxane bond.

Z^{1'} is preferably a C₁₋₆ alkylene group, - (CH₂)_{z1'}-O-(CH₂)_{z2'}- (wherein z1' is an integer of 0 to 6 such as an integer of 1 to 6, and z2' is an integer of 0 to 6 such as an integer of 1 to 6), or -(CH₂)_{z3'}-phenylene-(CH₂)_{z4'}-(wherein z3' is an integer of 0 to 6 such as an integer of 1 to 6, and z4' is an integer of 0 to 6 such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z^{1'} is a C₁₋₆ alkylene group or -(CH₂)_{z3'}-phenylene-(CH₂)_{z4'}-, and preferably -phenylene-(CH₂)_{z4'}-. When Z^{1'} is such a group, light resistance, in particular ultraviolet resistance, can be further enhanced.

In another preferable embodiment, Z^{1'} is a C₁₋₃ alkylene group. In one embodiment, Z^{1'} may be -CH₂CH₂CH₂-. In another embodiment, Z^{1'} may be -CH₂CH₂-.

R^{21'} is each independently -Z^{1"}-SiR^{22"}_{q1"}R^{23"}_{r1"}.

Z^{1"} is each independently an oxygen atom or a divalent organic group. Below, the structure denoted as Z^{1"} is bonded to (SiR^{22"}_{q1"}R^{23"}_{r1"}) on the right side.

In a preferable embodiment, Z^{1"} is a divalent organic group.

In a preferable embodiment, Z^{1"} does not include a group that forms a siloxane bond with the Si atom to which Z^{1"} is bonded. Preferably, in the formula (S3), (Si-Z^{1"}-Si) does not contain a siloxane bond.

Z^{1"} is preferably a C₁₋₆ alkylene group, -(CH₂)_{z1"}-O-(CH₂)_{z2"}= (wherein z1" is an integer of 0 to 6 such as an integer of 1 to 6, and z2" is an integer of 0 to 6 such as an integer of 1 to 6), or - (CH₂)_{z3"}-phenylene-(CH₂)_{z4"}-(wherein z3" is an integer of 0 to 6 such as an integer of 1 to 6, and z4" is an integer of 0 to 6 such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z^{1"} is a C₁₋₆ alkylene group or -(CH₂)_{z3"}-phenylene-(CH₂)_{z4"}-, and preferably -phenylene-(CH₂)_{z4"}-. When Z^{1"} is such a group, light resistance, in particular ultraviolet resistance, can be further enhanced.

In another preferable embodiment, Z^{1"} is a C₁₋₃ alkylene group. In one embodiment, Z^{1"} may be -CH₂CH₂CH₂-. In another embodiment, Z^{1"} may be -CH₂CH₂-.

R^{22"} is each independently a hydroxyl group or a hydrolyzable group.

R^{22'} is preferably each independently a hydrolyzable group.

R^{22"} is preferably each independently -OR^{j}, -OCOR^{j}, -ON=CR^{j}₂, -NR^{j}₂, -NHR^{j}, -NCO, or a halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{j} is a methyl group, and in another embodiment, R^{j} is an ethyl group.

R^{23"} is each independently a hydrogen atom or a monovalent organic group. Such a monovalent organic group is a monovalent organic group excluding the above hydrolyzable group.

In one embodiment, the monovalent organic group is a C₁₋₂₀ alkyl group, more preferably a C₁₋₆ alkyl group, and even more preferably a methyl group.

q1" is each independently an integer of 0 to 3, and r1" is each independently an integer of 0 to 3. The sum of q1" and r1" is 3 in the (SiR^{22"}_{q1"}R^{23"}_{r1"}) unit.

q1" is each independently an integer of preferably 1 to 3, more preferably 2 to 3, and even more preferably 3 for each (SiR^{22"}_{q1"}R^{23"}_{r1"}) unit.

R^{22'} is each independently a hydroxyl group or a hydrolyzable group.

R^{22'} is preferably each independently a hydrolyzable group.

R^{22'} is preferably each independently -OR^{j}, -OCOR^{j}, -ON=CR^{j}₂, -NR^{j}₂, -NHR^{j}, -NCO, or a halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{j} is a methyl group, and in another embodiment, R^{j} is an ethyl group.

R^{23'} is each independently a hydrogen atom or a monovalent organic group. Such a monovalent organic group is a monovalent organic group excluding the hydrolyzable group.

In one embodiment, the monovalent organic group is a C₁₋₂₀ alkyl group, more preferably a C₁₋₆ alkyl group, and even more preferably a methyl group.

p1' is each independently an integer 0 to 3, q1' is each independently an integer of 0 to 3, and r1' is each independently an integer of 0 to 3. The sum of p', q1', and r1' is 3 in the (SiR^{21'}_{p1'}R^{22'}_{q1'}R^{23'}_{r1'}) unit.

In one embodiment, p1' is 0.

In one embodiment, p1' may be each independently an integer of 1 to 3, an integer of 2 to 3, or 3 for each (SiR^{21'}_{p1'}R^{22'}_{q1'}R^{23'}_{r1'}) unit. In a preferable embodiment, p1' is 3.

In one embodiment, q1' is each independently an integer of 1 to 3, preferably an integer of 2 to 3, and more preferably 3 for each (SiR^{21'}_{p1'}R^{22'}_{q1'}R^{23'}_{r1'}) unit.

In one embodiment, p1' is 0, and q1' is each independently an integer of 1 to 3, preferably an integer of 2 to 3, and even more preferably 3 for each (SiR^{21'}_{p1'}R^{22'}_{q1'}R^{23'}_{r1'}) unit.

R²² is each independently a hydroxyl group or a hydrolyzable group.

R²² is preferably each independently a hydrolyzable group.

R²² is preferably each independently -OR^{j}, -OCOR^{j}, -ON=CR^{j}₂, -NR^{j}₂, -NHR^{j}, -NCO, or a halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{j} is a methyl group, and in another embodiment, R^{j} is an ethyl group.

R²³ is each independently a hydrogen atom or a monovalent organic group. Such a monovalent organic group is a monovalent organic group excluding the hydrolyzable group.

In one embodiment, the monovalent organic group is a C₁₋₂₀ alkyl group, more preferably a C₁₋₆ alkyl group, and even more preferably a methyl group.

p1 is each independently an integer 0 to 3, q1 is each independently an integer of 0 to 3, and r1 is each independently an integer of 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferable embodiment, p1 is 3.

In one embodiment, q1 is each independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, and even more preferably 3 for each (SiR²¹ₚ₁R²²_{q1}R²³ᵣ₁) unit.

In the above formula, R^{b1} is each independently a hydroxyl group or a hydrolyzable group.

R^{b1} is preferably each independently a hydrolyzable group.

R^{b1} is preferably each independently -OR^{j}, -OCOR^{j}, -ON=CR^{j}₂, -NR^{j}₂, -NHR^{j}, -NCO, or a halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{j} is a methyl group, and in another embodiment, R^{j} is an ethyl group.

In the above formula, R^{c1} is each independently a hydrogen atom or a monovalent organic group. Such a monovalent organic group is a monovalent organic group excluding the above hydrolyzable group.

In one embodiment, the monovalent organic group is a C₁₋₂₀ alkyl group, more preferably a C₁₋₆ alkyl group, and even more preferably a methyl group.

k1 is each independently an integer 0 to 3, l1 is each independently an integer of 0 to 3, and m1 is each independently an integer of 0 to 3. The sum of k1, l1, and m1 is 3 in the (SiR^{a1}ₖ₁R^{b1}ₗ₁R^{c1}ₘ₁) unit.

In one embodiment, k1 is each independently an integer of 1 to 3, preferably 2 or 3, and more preferably 3 for each (SiR^{a1}ₖ₁R^{b1}ₗ₁R^{c1}ₘ₁) unit. In a preferable embodiment, k1 is 3.

In the above formulae (A1) and (A2), when R^{Si} is a group represented by the formula (S3), preferably, at least two Si atoms to which a hydroxyl group or a hydrolyzable group is bonded are present in the terminal moieties of the formula (A1) and the formula (A2).

In a preferable embodiment, the group represented by the formula (S3) has any one of -Z¹SiR²²_{q1}R²³ᵣ₁ (wherein q1 is an integer of 1 to 3, preferably 2 or 3, and more preferably 3, and r1 is an integer of 0 to 2), -Z^{1'}-SiR^{22'}_{q1'}R^{23'}_{r1'} (wherein q1' is an integer of 1 to 3, preferably 2 or 3, and more preferably 3, and r1' is an integer of 0 to 2), and -Z^{1"}-SiR^{22"}_{q1"}R^{23"}_{r1"} (wherein q1" is an integer of 1 to 3, preferably 2 or 3, and more preferably 3, and r1" is an integer of 0 to 2). Z¹, Z^{1'}, Z^{1"}, R²², R²³, R^{22'}, R^{23'}, R^{22"}, and R^{23"} have the same meanings as defined above.

In a preferable embodiment, when R^{21'} is present in the formula (S3), q1" is an integer of 1 to 3, preferably 2 or 3, and more preferably 3 in at least one and preferably all R^{21'} groups.

In a preferable embodiment, when R²¹ is present in the formula (S3), p1' is 0, and q1' is an integer of 1 to 3, preferably 2 or 3, and more preferably 3 in at least one and preferably all R²¹ groups.

In a preferable embodiment, when R^{a1} is present in the formula (S3), p1 is 0, and q1 is an integer of 1 to 3, preferably 2 or 3, and more preferably 3 in at least one and preferably all R^{a1} groups.

In a preferable embodiment, in the formula (S3), k1 is 2 or 3 and preferably 3, p1 is 0, q1 is 2 or 3 and preferably 3.

R^{d1} is each independently -Z²-CR³¹ₚ₂R³²_{q2}R³³ᵣ₂.

Z² is each independently a single bond, an oxygen atom, or a divalent organic group. Below, the structure denoted as Z² is bonded to (CR³¹ₚ₂R³²_{q2}R³³ᵣ₂) on the right side.

In a preferable embodiment, Z² is a divalent organic group.

Z² is preferably a C₁₋₆ alkylene group, -(CH₂)_{z5}-O-(CH₂)_{z6}-(wherein z5 is an integer of 0 to 6 such as an integer of 1 to 6, and z6 is an integer of 0 to 6 such as an integer of 1 to 6), or - (CH₂)_{z7}-phenylene-(CH₂)_{z8}- (wherein z7 is an integer of 0 to 6 such as an integer of 1 to 6, and z8 is an integer of 0 to 6 such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z² is a C₁₋₆ alkylene group or - (CH₂)_{z7}-phenylene-(CH₂)_{z8}-, and preferably -phenylene-(CH₂)_{z8}-. When Z² is such a group, light resistance, in particular ultraviolet resistance, can be further enhanced.

In another preferable embodiment, Z² is a C₁₋₃ alkylene group. In one embodiment, Z² may be -CH₂CH₂CH₂-. In another embodiment, Z² may be -CH₂CH₂-.

R³¹ is each independently -Z^{2'}-CR^{32'}_{q2'}R^{33'}_{r2'}.

Z^{2'} is each independently a single bond, an oxygen atom, or a divalent organic group. Below, the structure denoted as Z^{2'} is bonded to (CR^{32'}_{q2'}R^{33'}_{r2'}) on the right side.

Z^{2'} is preferably a C₁₋₆ alkylene group, -(CH₂)_{z5'}-O-(CH₂)_{z6'}- (wherein z5' is an integer of 0 to 6 such as an integer of 1 to 6, and z6' is an integer of 0 to 6 such as an integer of 1 to 6), or - (CH₂)_{z7'}-phenylene- (CH₂)_{z8'}-(wherein z7' is an integer of 0 to 6 such as an integer of 1 to 6, and z8' is an integer of 0 to 6 such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z^{2'} is a C₁₋₆ alkylene group or -(CH₂)_{z7'}-phenylene-(CH₂)_{z8'}-, and preferably -phenylene-(CH₂)_{z8'}-. When Z^{2'} is such a group, light resistance, in particular ultraviolet resistance, can be further enhanced.

In another preferable embodiment, Z^{2'} is a C₁₋₃ alkylene group. In one embodiment, Z^{2'} may be -CH₂CH₂CH₂-. In another embodiment, Z^{2'} may be -CH₂CH₂-.

R^{32'} is each independently -Z³-SiR³⁴ₙ₂R³⁵₃₋ₙ₂.

Z³ is each independently a single bond, an oxygen atom, or a divalent organic group. Below, the structure denoted as Z³ is bonded to (SiR³⁴ₙ₂R³⁵₃₋ₙ₂) on the right side.

In one embodiment, Z³ is an oxygen atom.

In one embodiment, Z³ is a divalent organic group.

Z³ is preferably a C₁₋₆ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or - (CH₂)_{z7"}-phenylene- (CH₂)_{z8"}-(wherein z7" is an integer of 0 to 6 such as an integer of 1 to 6, and z8" is an integer of 0 to 6 such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z³ is a C₁₋₆ alkylene group or - (CH₂)_{z7"}-phenylene-(CH₂)_{z8"}-, preferably -phenylene-(CH₂)_{z8"}-. When Z³ is such a group, light resistance, in particular ultraviolet resistance, can be further enhanced.

In another preferable embodiment, Z³ is a C₁₋₃ alkylene group. In one embodiment, Z³ may be -CH₂CH₂CH₂-. In another embodiment, Z³ may be -CH₂CH₂-.

R³⁴ is each independently a hydroxyl group or a hydrolyzable group.

R³⁴ is preferably each independently a hydrolyzable group.

R³⁴ is preferably each independently -OR^{j}, -OCOR^{j}, -ON=CR^{j}₂, -NR^{j}₂, -NHR^{j}, -NCO, or a halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{j} is a methyl group, and in another embodiment, R^{j} is an ethyl group.

R³⁵ is each independently a hydrogen atom or a monovalent organic group. Such a monovalent organic group is a monovalent organic group excluding the above hydrolyzable group.

In R³⁵, the monovalent organic group is preferably a C₁₋₂₀ alkyl group, more preferably a C₁₋₆ alkyl group, and even more preferably a methyl group.

In the above formula, n2 is each independently an integer of 0 to 3 for each (SiR³⁴ₙ₂R³⁵₃₋ₙ₂) unit. However, when R^{Si} is a group represented by the formula (S4), the terminal moieties of the formula (A1) and the formula (A2) have at least one (SiR³⁴ₙ₂R³⁵₃₋ₙ₂) unit wherein n2 is 1 to 3. That is, in such terminal moieties, not all n2 are 0 at the same time. In other words, in the terminal moieties of the formula (A1) and the formula (A2), at least one Si atom to which a hydroxyl group or a hydrolyzable group is bonded is present.

n2 is each independently an integer of preferably 1 to 3, more preferably 2 to 3, and even more preferably 3 for each (SiR³⁴ₙ₂R³⁵₃₋ₙ₂) unit.

R^{33'} is each independently a hydrogen atom, a hydroxyl group, or a monovalent organic group. Such a monovalent organic group is a monovalent organic group excluding the hydrolyzable group.

In R^{33'}, the monovalent organic group may preferably be a C₁₋₂₀ alkyl group or a group represented by R^{41'}-(OR^{42'})_{y1'}-O_{y2'}-, wherein R^{41'} is a hydrogen atom or a C₁₋₆ alkyl group, R^{42'} is each independently a C₁₋₆ alkylene group, y1' is an integer of 1 to 30, and y2' is 0 or 1.

In one embodiment, R^{41'} is a hydrogen atom.

In another embodiment, R^{41'} is a C₁₋₆ alkyl group and preferably a C₁₋₃ alkyl group.

R^{42'} is each independently a C₁₋₆ alkylene group, preferably a C₁₋₃ alkylene group, and more preferably a C₂₋₃ alkylene group.

y1' is an integer of 1 to 30, preferably an integer of 1 to 20, more preferably an integer of 1 to 10, even more preferably an integer of 2 to 10, such as an integer of 2 to 6, an integer of 2 to 4, an integer of 3 to 6, or an integer of 4 to 6.

In one embodiment, R^{33'} is a hydroxyl group.

In another embodiment, R^{33'} is a C₁₋₂₀ alkyl group and more preferably a C₁₋₆ alkyl group.

In another embodiment, R^{33'} is R^{41'}-(OR^{42'})_{y1'}-O_{y2'}-.

q2' is each independently an integer of 0 to 3, and r2' is each independently an integer of 0 to 3. The sum of q2' and r2' is 3 in the (CR^{32'}_{q2'}R^{33'}_{r2'}) unit.

q2' is each independently an integer of preferably 1 to 3, more preferably 2 to 3, and even more preferably 3 for each (CR^{32'}_{q2'}R^{33'}_{r2'}) unit.

R³² is each independently -Z³-SiR³⁴ₙ₂R³⁵₃₋ₙ₂. Such -Z³-SiR³⁴ₙ₂R³⁵₃₋ₙ₂ has the same meanings as those described for R^{32'}.

R³³ is each independently a hydrogen atom, a hydroxyl group, or a monovalent organic group. Such a monovalent organic group is a monovalent organic group excluding the hydrolyzable group.

In R³³, the monovalent organic group may preferably be a C₁₋₂₀ alkyl group or a group represented by R⁴¹-(OR⁴²)_{y1}*-*O_{y2}*-*, wherein ^{R41} is a hydrogen atom or a C₁₋₆ alkyl group, R⁴² is each independently a C₁₋₆ alkylene group, y1 is an integer of 1 to 30, and y2 is 0 or 1.

In one embodiment, R⁴¹ is a hydrogen atom.

In another embodiment, R⁴¹ is a C₁₋₆ alkyl group and preferably a C₁₋₃ alkyl group.

R⁴² is each independently a C₁₋₆ alkylene group, preferably a C₁₋₃ alkylene group, and more preferably a C₂₋₃ alkylene group.

y1 is an integer of 1 to 30, preferably an integer of 1 to 20, more preferably an integer of 1 to 10, even more preferably an integer of 2 to 10, such as an integer of 2 to 6, an integer of 2 to 4, an integer of 3 to 6, or an integer of 4 to 6.

In one embodiment, R³³ is a hydroxyl group.

In another embodiment, R³³ is a C₁₋₂₀ alkyl group and more preferably a C₁₋₆ alkyl group.

In another embodiment, R³³ is R⁴¹-(OR⁴²)_{y1}-O_{y2}-.

p2 is each independently an integer of 0 to 3, q2 is each independently an integer of 0 to 3, and r2 is each independently an integer of 0 to 3. The sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferable embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and even more preferably 3 for each (CR³¹ₚ₂R³²_{q2}R³³ᵣ₂) unit.

R^{e1} is each independently -Z³-SiR³⁴ₙ₂R³⁵₃₋ₙ₂. Such -Z³-SiR³⁴ₙ₂R³⁵₃₋ₙ₂ has the same meanings as those described for R^{32'}.

R^{f1} is each independently a hydrogen atom, a hydroxyl group, or a monovalent organic group. Such a monovalent organic group is a monovalent organic group excluding the hydrolyzable group.

In R^{f1}, the monovalent organic group may preferably be a C₁₋₂₀ alkyl group or a group represented by R⁴³-(OR⁴⁴)_{y3}-O_{y4}-, wherein R⁴³ is a hydrogen atom or a C₁₋₆ alkyl group, R⁴⁴ is each independently a C₁₋₆ alkylene group, y3 is an integer of 1 to 30, and y4 is 0 or 1.

In one embodiment, R⁴³ is a hydrogen atom.

In another embodiment, R⁴³ is a C₁₋₆ alkyl group and preferably a C₁₋₃ alkyl group.

R⁴⁴ is each independently a C₁₋₆ alkylene group, preferably a C₁₋₃ alkylene group, and more preferably a C₂₋₃ alkylene group.

y3 is an integer of 1 to 30, preferably an integer of 1 to 20, more preferably an integer of 1 to 10, even more preferably an integer of 2 to 10, such as an integer of 2 to 6, an integer of 2 to 4, an integer of 3 to 6, or an integer of 4 to 6.

In one embodiment, R^{f1} is a hydroxyl group.

In another embodiment, R^{f1} is a C₁₋₂₀ alkyl group and more preferably a C₁₋₆ alkyl group.

In another embodiment, R^{f1} is R⁴³-(OR⁴⁴)_{y3}-O_{y4}-.

k2 is each independently an integer 0 to 3, l2 is each independently an integer of 0 to 3, and m2 is each independently an integer of 0 to 3. The sum of k2, l2, and m2 is 3 in the (CR^{d1}ₖ₂R^{e1}ₗ₂R^{f1}ₘ₂) unit.

In the above formulae (A1) and (A2), when R^{Si} is a group represented by the formula (S4), preferably, at least two Si atoms to which a hydroxyl group or a hydrolyzable group is bonded are present in the terminal moieties of the formula (A1) and the formula (A2).

In one embodiment, when R^{Si} is a group represented by the formula (S4), 2 or more, for example, 2 to 27, preferably 2 to 9, more preferably 2 to 6, even more preferably 2 to 3, and particularly preferably 3 (SiR³⁴ₙ₂R³⁵₃₋ₙ₂) units wherein n2 is 1 to 3, preferably 2 or 3, and more preferably 3 are present in each terminal moiety of the formula (A1) and the formula (A2).

In a preferable embodiment, when R^{32'} is present in the formula (S4), n2 is an integer of 1 to 3, preferably 2 or 3, and more preferably 3 in at least one and preferably all R^{32'} groups.

In a preferable embodiment, when R³² is present in the formula (S4), n2 is an integer of 1 to 3, preferably 2 or 3, and more preferably 3 in at least one and preferably all R³² groups.

In a preferable embodiment, when R^{e1} is present in the formula (S4), n2 is an integer of 1 to 3, preferably 2 or 3, and more preferably 3 in at least one and preferably all R^{a1} groups.

In a preferable embodiment, k2 is 0, l2 is 2 or 3 and preferably 3, and n2 is 2 or 3 and preferably 3 in the formula (S4).

R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, l1, m1, k2, l2, and m2 are as defined above.

In a preferable embodiment, R^{g1} and R^{h1} are each independently -Z⁴-SiR¹¹ₙ₁R¹²₃₋ₙ₁.

Z⁴ is each independently a single bond, an oxygen atom, or a divalent organic group. Below, the structure denoted as Z⁴ is bonded to (SiR¹¹ₙ₁R¹²₃₋ₙ₁) on the right side.

In one embodiment, Z⁴ is an oxygen atom.

In one embodiment, Z⁴ is a divalent organic group.

Z⁴ is preferably a C₁₋₆ alkylene group, - (CH₂)_{z5"}-O-(CH₂)_{z6"}- (wherein z5" is an integer of 0 to 6 such as an integer of 1 to 6, and z6" is an integer of 0 to 6 such as an integer of 1 to 6), or - (CH₂)_{z7"}-phenylene-(CH₂)_{z8"}-(wherein z7" is an integer of 0 to 6 such as an integer of 1 to 6, and z8" is an integer of 0 to 6 such as an integer of 1 to 6). Such a C₁₋₆ alkylene group may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z⁴ is a C₁₋₆ alkylene group or -(CH₂)_{z7"}-phenylene-(CH₂)_{z8"}-, and preferably -phenylene-(CH₂)_{z8"}-. When Z³ is such a group, light resistance, in particular ultraviolet resistance, can be further enhanced.

In another preferable embodiment, Z⁴ is a C₁₋₃ alkylene group. In one embodiment, Z⁴ may be -CH₂CH₂CH₂-. In another embodiment, Z⁴ may be -CH₂CH₂-.

In one embodiment, R^{Si} is a group represented by the formula (S2), (S3), (S4), or (S5). These compounds are capable of forming a surface-treating layer having high surface lubricity.

In one embodiment, R^{Si} is a group represented by the formula (S1), (S3), (S4), or (S5). These compounds have a plurality of hydrolyzable groups at one terminal, and are therefore capable of forming a surface-treating layer that firmly adheres to a substrate and that has high friction durability.

In one embodiment, R^{Si} is a group represented by the formula (S1), (S3), or (S4). These compounds have a plurality of hydrolyzable groups at one terminal, and are therefore capable of forming a surface-treating layer that firmly adheres to a substrate and that has high friction durability.

In one embodiment, R^{Si} is a group represented by the formula (S3) or (S4). These compounds can have a plurality of hydrolyzable groups branched from one Si atom or C atom at one terminal, and are therefore capable of forming a surface-treating layer that has higher friction durability.

In one embodiment, R^{Si} is a group represented by the formula (S1).

In one embodiment, R^{Si} is a group represented by the formula (S2).

In one embodiment, R^{Si} is a group represented by the formula (S3).

In one embodiment, R^{Si} is a group represented by the formula (S4).

In one embodiment, R^{Si} is a group represented by the formula (S5).

In the formulae (A1) and (A2), X^{A} is interpreted as a linker connecting fluoropolyether moieties (R^{F1} and R^{F2}), which mainly provide water-repellency, surface lubricity and the like, to a moiety (R^{Si}) providing the ability of binding to a substrate. Accordingly, such X^{A} may be a single bond or any group as long as the compounds represented by the formulae (A1) and (A2) can stably exist.

In the above formula (A1), α1 is an integer of 1 to 9, and β1 is an integer of 1 to 9. These α1 and β1 may vary depending on the valence of X^{A}. The sum of α1 and β1 is the same as the valence of X^{A}. For example, when X^{A} is a decavalent organic group, the sum of α1 and β1 is 10, e.g., α1 may be 9 and β may be 1, α1 may be 5 and β1 may be 5, or α1 may be 1 and β1 may be 9. When X^{A} is a divalent organic group, α1 and β1 are 1.

In the above formula (A2), γ is an integer of 1 to 9. γ may vary depending on the valence of X^{A}. That is, γ is a value obtained by subtracting 1 from the valence of X^{A}.

X^{A} is each independently a single bond or a di- to decavalent organic group.

In one embodiment, X^{A} does not include a siloxane bond (-Si-O-Si-).

The di- to decavalent organic group in X^{A} is preferably a di- to octavalent organic group. In one embodiment, such a di- to decavalent organic group is preferably a di- to tetravalent organic group, and more preferably a divalent organic group. In another embodiment, such a di- to decavalent organic group is preferably a tri- to octavalent organic group, and more preferably a tri- to hexavalent organic group.

In one embodiment, X^{A} is a single bond or a divalent organic group, α1 is 1, and β1 is 1.

In one embodiment, X^{A} is a single bond or a divalent organic group, γ is 1.

In one embodiment, X^{A} is a tri- to hexavalent organic group, α1 is 1, and β1 is 2 to 5.

In one embodiment, X^{A} is a tri- to hexavalent organic group, and γ is 2 to 5.

In one embodiment, X^{A} is a trivalent organic group, α1 is 1, and β1 is 2.

In one embodiment, X^{A} is a trivalent organic group, and γ is 2.

When X^{A} is a single bond or a divalent organic group, the formulae (A1) and (A2) are represented by the following formulae (A1') and (A2').
[Formula 22]

R^{F1}-X^{A}-R^{Si} (A1')

R^{Si}-X^{A}-R^{F2}-X^{A} -R^{Si} (A2')

In one embodiment, X^{A} is a single bond.

In another embodiment, X^{A} is a divalent organic group.

In one embodiment, examples of X^{A} include a single bond or a divalent organic group represented by the following formula:

-(R⁵¹)ₚ₅-(X⁵¹)_{q5}-

wherein
R⁵¹ represents a single bond, -(CH₂)ₛ₅-, or an o-, m- or p-phenylene group, and is preferably -(CH₂)ₛ₅-,
s5 is an integer of 1 to 20, preferably 1 to 6, more preferably 1 to 3, and even more preferably 1 or 2,
X⁵¹ represents -(X⁵²)ₗ₅-,
X⁵² each independently represents a group selected from the group consisting of -O-, -S-, -CO-, -NR⁵⁴-, - (CH₂)ₙ₅-, an o-, m- or p-phenylene group, -COO-, -OCO-, -CONR⁵⁴-, -NR⁵⁴CO-, -O-CONR⁵⁴-, -NR⁵⁴CO-O-, -Si(R⁵³)₂-, and -(Si(R⁵³)₂O)ₘ₅-Si(R⁵³)₂-,
R⁵³ each independently represents a phenyl group, a C₁₋₆ alkyl group, or a C₁₋₆ alkoxy group, is preferably a phenyl group or a C₁₋₆ alkyl group, and is more preferably a methyl group,
R⁵⁴ each independently represents a hydrogen atom, a phenyl group, or a C₁₋₆ alkyl group (preferably a methyl group),
m5 is each independently at each occurrence an integer of 1 to 100, and preferably an integer of 1 to 20,
n5 is each independently at each occurrence an integer of 1 to 20, preferably an integer of 1 to 6, and more preferably an integer of 1 to 3,
l5 is an integer of 1 to 10, preferably an integer of 1 to 5, and more preferably an integer of 1 to 3,
p5 is 0 or 1, and
q5 is 0 or 1,
provided that at least one of p5 and q5 is 1, the occurrence order of the respective repeating units enclosed within parentheses provided with p5 or q5 is not limited, and
the right side is bonded to R^{Si}.

In a preferable embodiment, X^{A} is

X^{A} is a single bond or a divalent organic group represented by the following formula:

- (R⁵¹)ₚ₅-(X⁵¹)_{q5}-

wherein
R⁵¹ is a single bond or - (CH₂)ₛ₅-,
s5 is an integer of 1 to 20,
X⁵¹ is -(X⁵²)ₗ₅-,
X⁵² each independently represents a group selected from the group consisting of -O-, -S-, -CO-, -NR⁵⁴-, -(CH₂)ₙ₅-, - COO-, -OCO-, -CONR⁵⁴-, -NR⁵⁴CO-, -O-CONR⁵⁴-, -NR⁵⁴CO-O-, - Si (R⁵³)₂-, and - (Si(R⁵³)₂O)ₘ₅-Si(R⁵³)₂-,
R⁵³ is each independently a phenyl group, a C₁₋₆ alkyl group, or a C₁₋₆ alkoxy group,
R⁵⁴ is each independently a hydrogen atom, a phenyl group, or a C₁₋₆ alkyl group,
m5 is each independently an integer of 1 to 100,
n5 is each independently an integer of 1 to 20,
l5 is an integer of 1 to 10,
p5 is 0 or 1, and
q5 is 0 or 1,
provided that at least one of p5 and q5 is 1, the occurrence order of the respective repeating units enclosed within parentheses provided with p5 or q5 is not limited, and
the right side is bonded to R^{Si}.

Preferably, X^{A} may be each independently
a single bond,
a C₁₋₂₀ alkylene group,

   -R⁵¹-X⁵³-R⁵²-,

   or

   -X⁵⁴-R⁵-
wherein and R⁵² are as defined above,
   X⁵³ is

   -O-,

   -S-,

   -C(O)O-,

   -CONR⁵⁴-,

   -O-CONR⁵⁴-,

   -Si (R⁵³)₂-,

   - (Si(R⁵³)₂O)ₘ₅-Si(R⁵³)₂-,

   -O-(CH₂)ᵤ₅-(Si(R⁵³)₂O)ₘ₅-Si(R⁵³)₂-,

   -O-(CH₂)ᵤ₅-Si(R⁵³)₂-O-Si(R⁵³)₂-CH₂CH₂-Si(R⁵³)₂-O-Si(R⁵³)₂-,

   -O-(CH₂)ᵤ₅-Si(OCH₃)₂OSi(OCH₃)₂-,

   -CONR⁵⁴-(CH₂)ᵤ₅-(Si(R⁵³)₂O)ₘ₅-Si(R⁵³)₂-, or

   -CONR⁵⁴-(CH₂)ᵤ₅-N(R⁵⁴)-,
(wherein R⁵³, R⁵⁴, and m5 are as defined above, and
   u5 is an integer of 1 to 20, preferably an integer of 2 to 6, and more preferably an integer of 2 to 3), and
   X⁵⁴ represents

   -S-,

   -C(O)O-,

   -CONR⁵⁴-,

   -O-CONR⁵⁴-,

   -CONR⁵⁴-(CH₂)ᵤ₅-(Si(R⁵⁴)₂O)ₘ₅-Si(R⁵⁴)₂-, or

   -CONR⁵⁴-(CH₂)ᵤ₅-N(R⁵⁴)-,

   wherein each symbol is as defined above.

More preferably, X^{A} is each independently
a single bond,
a C₁₋₂₀ alkylene group,

   -(CH₂)ₛ₅-X⁵³-,

   -(CH₂)ₛ₅-X⁵³-(CH₂)ₜ₅-,

   -X⁵⁴-, or

   -X⁵⁴-(CH₂)ₜ₅-,
wherein X⁵³, X⁵⁴, s5, and t5 are as defined above.

More preferably, X^{A} is each independently a single bond, a C₁₋₂₀ alkylene group,

-(CH₂)ₛ₅-X⁵³-(CH₂)ₜ₅-,

or

-X⁵⁴-(CH₂)ₜ₅-,

wherein each symbol is as defined above.

In a preferable embodiment, X^{A} may be each independently
a single bond,
a C₁₋₂₀ alkylene group,

   -(CH₂)ₛ₅-X⁵³-, or

   -(CH₂)ₛ₅-X⁵³-(CH₂)ₜ₅-,
wherein
   X⁵³ is -O-, -CONR⁵⁴-, or -O-CONR⁵⁴-,
   R⁵⁴ each independently represents a hydrogen atom, a phenyl group, or a C₁₋₆ alkyl group,
   s5 is an integer of 1 to 20, and
   t5 is an integer of 1 to 20.

In a preferable embodiment, X^{A} may each independently be

- (CH₂)ₛ₅-O-(CH₂)ₜ₅- or

-CONR⁵⁴-(CH₂)ₜ₅-,

wherein
R⁵⁴ each independently represents a hydrogen atom, a phenyl group, or a C₁₋₆ alkyl group,
s5 is an integer of 1 to 20, and
t5 is an integer of 1 to 20.

In one embodiment, X^{A} may each independently be
a single bond,
a C₁₋₂₀ alkylene group,

   -(CH₂)ₛ₅-O-(CH₂)ₜ₅-,

   -(CH₂)ₛ₅-(Si(R⁵³)₂O)ₘ₅-Si(R⁵³)₂-(CH₂)ₜ₅-,

   - (CH₂)ₛ₅-O-(CH₂)ᵤ₅-(Si(R⁵³)₂O)ₘ₅-Si(R⁵³)₂-(CH₂)ₜ₅-, or

   -(CH₂)ₛ₅-O-(CH₂)ₜ₅-Si(R⁵³)₂-(CH₂)ᵤ₅-Si(R⁵³)₂-(CᵥH₂ᵥ)-,
wherein R⁵³, m5, s5, t5, and u5 are as defined above, and v5 is an integer of 1 to 20, preferably an integer of 2 to 6, and more preferably an integer of 2 to 3.

In the above formula, -(CᵥH₂ᵥ)- may be linear or branched and may be, for example, -CH₂CH₂-, -CH₂CH₂CH₂-, -CH(CH₃)-, or -CH(CH₃)CH₂-.

X^{A} (typically the hydrogen atom of X^{A}) each independently is optionally substituted with one or more substituents selected from a fluorine atom, a C₁₋₃ alkyl group, and a C₁₋₃ fluoroalkyl group (preferably a C₁₋₃ perfluoroalkyl group). In a preferable embodiment, X^{A} is unsubstituted.

In one embodiment, X^{A} may each independently be a group other than an -O-C₁₋₆ alkylene group.

In another embodiment, examples of X^{A} include the following groups: 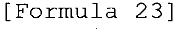 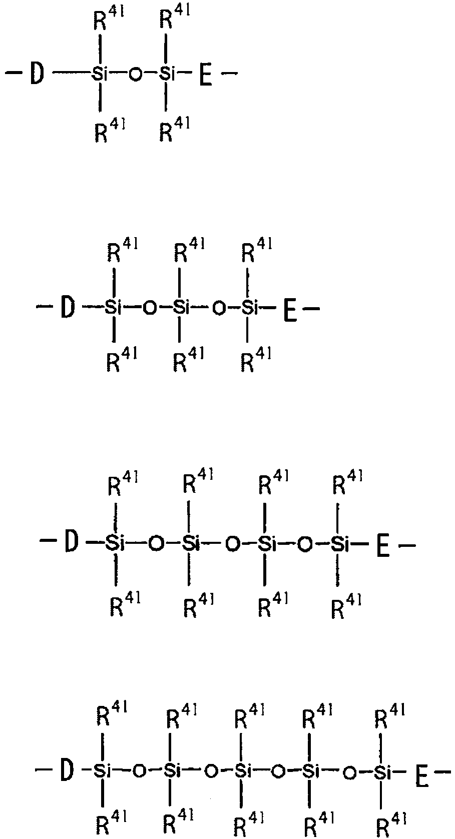 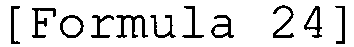 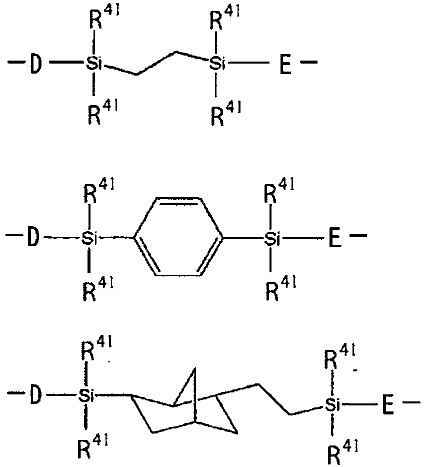 wherein R⁴¹ is each independently a hydrogen atom, a phenyl group, an alkyl group having 1 to 6 carbon atoms, or a C₁₋₆ alkoxy group, and preferably a methyl group;
D is a group selected from:

   -CH₂O(CH₂)₂-,

   -CH₂O(CH₂)₃-,

   -CF₂O (CH₂)₃-,

   -(CH₂)₂-,

   -(CH₂)₃-,

   -(CH₂)₄-,

   -CONH-(CH₂)₃-,

   -CON(CH₃)-(CH₂)₃-,

   -CON(Ph)-(CH₂)₃-

   (wherein Ph means phenyl), and 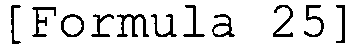 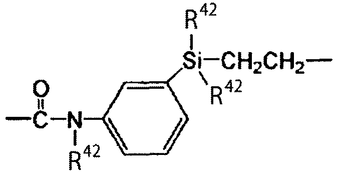 (wherein R⁴² each independently represents a hydrogen atom, a C₁₋₆ alkyl group, or a C₁₋₆ alkoxy group, preferably a methyl group or a methoxy group, and more preferably a methyl group) ;
E is -(CH₂)ₙ- (n is an integer of 2 to 6); and
D is bonded to R^{F1} or R^{F2} of the molecular backbone, and E is bonded to R^{Si}.

Specific examples of X^{A} include:
a single bond,

   -CH₂OCH₂-,

   -CH₂O(CH₂)₂-,

   -CH₂O(CH₂)₃-,

   -CH₂O(CH₂)₄-,

   -CH₂O(CH₂)₅-,

   -CH₂O(CH₂)₆-,

   -CH₂O(CH₂)₃Si(CH₃)₂OSi(CH₃)₂(CH₂)₂-,

   -CH₂O(CH₂)₃Si(CH₃)₂OSi(CH₃)₂OSi(CH₃)₂(CH₂)₂-,

   -CH₂O(CH₂)₃Si(CH₃)₂O(Si(CH₃)₂O)₂Si(CH₃)₂(CH₂)₂-,

   -CH₂O(CH₂)₃Si(CH₃)₂O(Si(CH₃)₂O)₃Si(CH₃)₂(CH₂)₂-,

   -CH₂O(CH₂)₃Si(CH₃)₂O(Si(CH₃)₂O)₁₀Si(CH₃)₂(CH₂)₂-,

   -CH₂O(CH₂)₃Si(CH₃)₂O(Si(CH₃)₂O)₂₀Si(CH₃)₂(CH₂)₂-,

   -CH₂OCF₂CHFOCF₂-,

   -CH₂OCF₂CHFOCF₂CF₂-,

   -CH₂OCF₂CHFOCF₂CF₂CF₂-,

   -CH₂OCH₂CF₂CF₂OCF₂-,

   -CH₂OCH₂CF₂CF₂OCF₂CF₂-

   -CH₂OCH₂CF₂CF₂OCF₂CF₂CF₂-,

   -CH₂OCH₂CF₂CF_{20C}F(CF₃)CF₂OCF₂-,

   -CH₂OCH₂CF₂CF₂₀CF(CF₃)CF₂OCF₂CF₂-,

   -CH₂OCH_{2C}F₂CF₂OCF(CF₃)CF₂OCF₂CF₂CF₂-,

   -CH₂OCH₂CHFCF₂OCF₂-,

   -CH₂OCH₂CHFCF₂OCF₂CF₂-,

   -CH₂OCH₂CHFCF₂OCF₂CF₂CF₂-,

   -CH₂OCH₂CHFCF₂OCF(CF₃)CF₂OCF₂-,

   -CH₂OCH₂CHFCF₂OCF(CF₃)CF₂OCF₂CF₂-,

   -CH₂OCH₂CHFCF₂OCF(CF₃)CF₂OCF₂CF₂CF₂-,

   -CH₂OCF₂CHFOCF₂CF₂CF₂-C(O)NH-CH₂-,

   CH₂OCH₂(CH₂)₇CH₂Si(OCH₃)₂OSi(OCH₃)₂(CH₂)₂Si(OCH₃)₂OSi(OCH₃)₂(CH₂ )₂-,

   -CH₂OCH₂CH₂CH₂Si(OCH₃)₂OSi(OCH₃)₂(CH₂)₃-,

   -CH₂OCH₂CH₂CH₂Si(OCH₂CH₃)₂OSi(OCH₂CH₃)₂(CH₂)₃-,

   -CH₂OCH_{2C}H₂CH₂Si(OCH₃)₂OSi(OCH₃)₂(CH₂)₂-,

   -CH₂OCH₂CH₂CH₂Si(OCH₂CH₃)₂OSi(OCH₂CH₃)₂(CH₂)₂-,

   - (CH₂)₂-Si(CH₃)₂-(CH₂)₂-,

   -CH₂-,

   - (CH₂)₂-,

   - (CH₂)₃-,

   - (CH₂)₄-,

   - (CH₂)₅-,

   -(CH₂)₆-,

   -CO-,

   -CONH-,

   -CONH-CH₂-,

   -CONH-(CH₂)₂-,

   -CONH-(CH₂)₃-,

   -CONH-(CH₂)₄-,

   -CONH-(CH₂)₅-,

   -CONH-(CH₂)₆-,

   -CON(CH₃)-CH₂-,

   -CON(CH₃)-(CH₂)₂-,

   -CON(CH₃)-(CH₂)₃-,

   -CON(CH₃)-(CH₂)₄-,

   -CON(CH₃)-(CH₂)₅-,

   -CON(CH₃)-(CH₂)₆- ,

   -CONH-(CH₂)₂NH(CH₂)₃-,

   -CONH-(CH₂)₆NH(CH₂)₃-,

   -CH₂O-CONH-(CH₂)₃-,

   -CH₂₀-CONH-(CH₂)₆-,

   -S-(CH₂)₃-,

   -(CH₂)₂S(CH₂)₃-,

   -CONH-(CH₂)₃Si(CH₃)₂OSi(CH₃)₂(CH₂)₂-,

   -CONH-(CH₂)₃Si(CH₃)₂OSi(CH₃)₂OSi(CH₃)₂(CH₂)₂-,

   -CONH-(CH₂)₃Si(CH₃)₂O(Si(CH₃)₂O)₂Si(CH₃)₂(CH₂)₂-,

   -CONH-(CH₂)₃Si(CH₃)₂O(Si(CH₃)₂O)₃Si(CH₃)₂(CH₂)₂-,

   -CONH-(CH₂)₃Si(CH₃)₂O(Si(CH₃)₂O)₁₀Si(CH₃)₂(CH₂)₂-,

   -CONH- (CH₂)₃Si(CH₃)₂O(Si(CH₃)₂O)₂₀Si(CH₃)₂(CH₂)₂-,

   -C(O)O-(CH₂)₃-,

   -C(O)O-(CH₂)₆-,

   -CH₂-O-(CH₂)₃-S(CH₃)₂-(CH₂)₂-Si(CH₃)₂-(CH₂)₂-,

   -CH₂-O-(CH₂)₃-S(CH₃)₂-(CH₂)₂-Si(CH₃)₂-CH(CH₃)-,

   -CH₂-O- (CH₂)₃-S(CH₃)₂-(CH₂)₂-Si(CH₃)₂-(CH₂)₃-,

   -CH₂-O-(CH₂)₃-S(CH₃)₂-(CH₂)₂-Si(CH₃)₂-CH(CH₃)-CH₂-,

   -OCH₂-,

   -O(CH₂)₃-,

   -OCFHCF₂-,

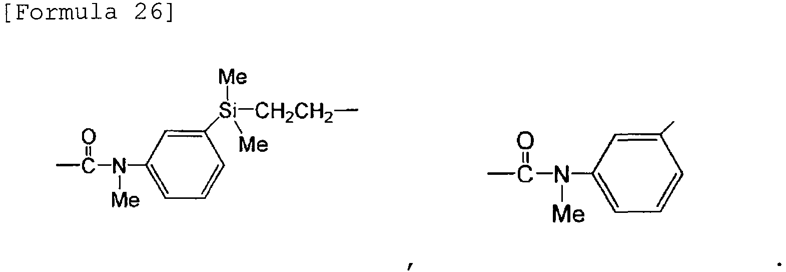

In yet another embodiment, X^{A} is each independently a group represented by the formula: -(R¹⁶)ₓ₁-(CFR¹⁷)_{y1}-(CH₂)_{z1}-. In the formula, x1, y1, and z1 are each independently an integer of 0 to 10, the sum of x1, y1, and z1 is 1 or more, and the occurrence order of the respective repeating units enclosed in parentheses is not limited in the formula.

In the above formula, R¹⁶ is each independently an oxygen atom, phenylene, carbazolylene, -NR¹⁸- (wherein R¹⁸ represents a hydrogen atom or an organic group), or a divalent organic group. Preferably, R¹⁸ is an oxygen atom or a divalent polar group.

Examples of the "divalent polar group" include, but are not limited to, -C(O)-, -C(=NR¹⁹)- and -C(O)NR¹⁹- (wherein R¹⁹ represents a hydrogen atom or a lower alkyl group). The "lower alkyl group" is, for example, an alkyl group having 1 to 6 carbon atoms, such as methyl, ethyl, and n-propyl, that is optionally substituted with one or more fluorine atoms.

In the above formula, R¹⁷ is each independently a hydrogen atom, a fluorine atom, or a lower fluoroalkyl group, and is preferably a fluorine atom. The "lower fluoroalkyl group" is, for example, a fluoroalkyl group having 1 to 6 carbon atoms and preferably 1 to 3 carbon atoms, preferably a perfluoroalkyl group having 1 to 3 carbon atoms, more preferably a trifluoromethyl group or a pentafluoroethyl group, and even more preferably a trifluoromethyl group.

X^{A} is bonded to R^{F1} or R^{F2} on the left side, and bonded to R^{Si} on the right side.

In yet another embodiment, examples of X^{A} include the following groups: 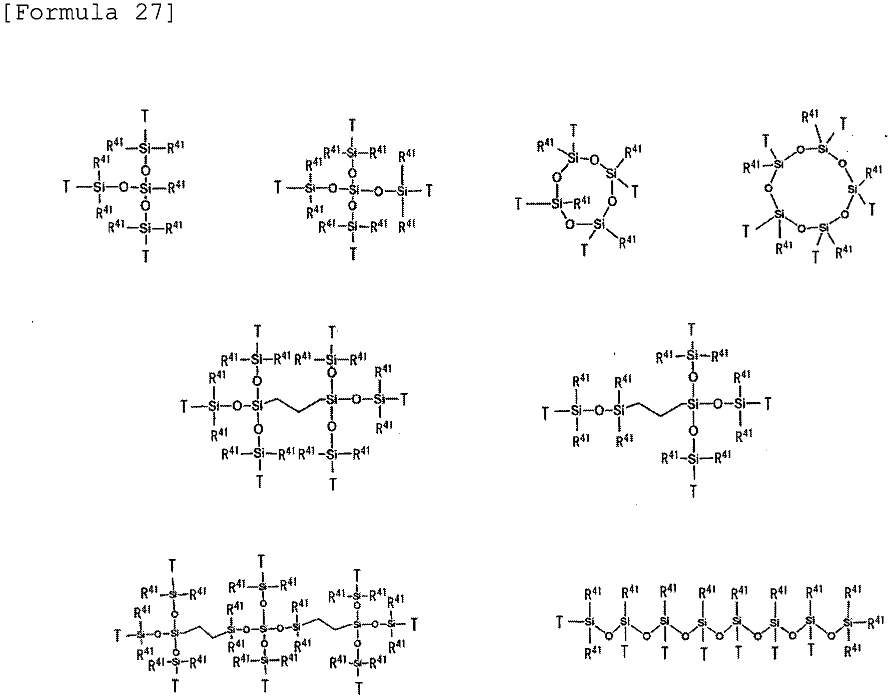 wherein
R⁴¹ is each independently a hydrogen atom, a phenyl group, an alkyl group having 1 to 6 carbon atoms, or a C₁₋₆ alkoxy group, and is preferably a methyl group;
some of the groups of T in each X^{A} group are the following groups bonded to R^{F1} or R^{F2} of the molecular backbone:

   -CH₂O(CH₂)₂-,

   -CH₂O(CH₂)₃-,

   -CF₂O(CH₂)₃-,

   - (CH₂)₂-,

   - (CH₂)₃-,

   - (CH₂)₄-,

   -CONH-(CH₂)₃-,

   -CON(CH₃)-(CH₂)₃-,

   -CON(Ph)-(CH₂)₃- (wherein Ph means phenyl), or 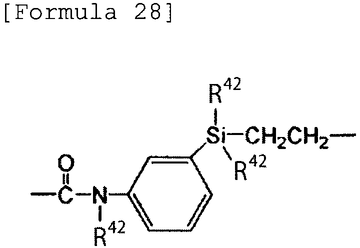
(wherein R⁴² each independently represents a hydrogen atom, a C₁₋₆ alkyl group, or a C₁₋₆ alkoxy group, preferably a methyl group or a methoxy group, and more preferably a methyl group); and some other groups of T are bonded to R^{Si} of the molecular backbone, and the remaining groups of T, if present, are each independently a methyl group, a phenyl group, a C₁₋₆ alkoxy group, or a radical scavenging group or a UV absorbing group.

The radical scavenging group is not limited as long as it can scavenge a radical generated by light irradiation, and examples include residues of benzophenones, benzotriazoles, benzoates, phenyl salicylates, crotonic acids, malonates, organoacrylates, hindered amines, hindered phenols, or triazines.

The UV absorbing group is not limited as long as it can absorb ultraviolet rays, and examples include residues of benzotriazoles, hydroxybenzophenones, esters of substituted and unsubstituted benzoic acid or salicylic acid compounds, acrylates or alkoxy cinnamates, oxamides, oxanilides, benzoxazinones, and benzoxazoles.

In a preferable embodiment, examples of preferable radical scavenging groups or UV absorbing groups include:

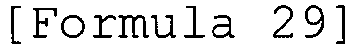

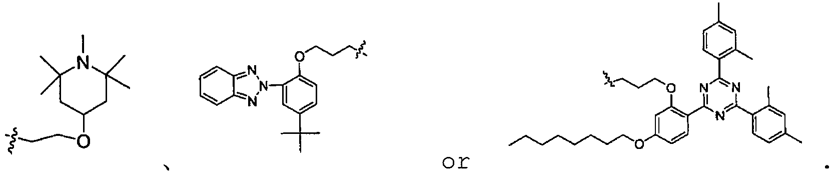

In this embodiment, X^{A} may be each independently a tri-to decavalent organic group.

In yet another embodiment, examples of X^{A} include the following groups: 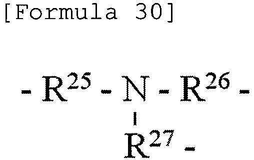 wherein R²⁵, R²⁶, and R²⁷ are each independently a di- to hexavalent organic group; and
R²⁵ is bonded to at least one R^{F1}, and R²⁶ and R²⁷ are each bonded to at least one R^{Si}.

In one embodiment, R²⁵ is a single bond, a C₁₋₂₀ alkylene group, a C₃₋₂₀ cycloalkylene group, a C₅₋₂₀ arylene group, - R⁵⁷-X⁵⁸-R⁵⁹-, -X⁵⁸-R⁵⁹-, or -R⁵⁷-X⁵⁸-. R⁵⁷ and R⁵⁹ are each independently a single bond, a C₁₋₂₀ alkylene group, a C₃₋₂₀ cycloalkylene group, or a C₅₋₂₀ arylene group. X⁵⁸ is -O-, - S-, -CO-, -O-CO-, or -COO-.

In one embodiment, R²⁶ and R²⁷ are each independently a hydrocarbon, or a group having at least one atom selected from N, O, and S at a terminal or in the main chain of a hydrocarbon, and preferable examples include a C₁₋₆ alkyl group, -R³⁶-R³⁷-R³⁶, and -R³⁶-CHR³⁸2-. Here, R³⁶ is each independently a single bond or an alkyl group having 1 to 6 carbon atoms, and preferably an alkyl group having 1 to 6 carbon atoms. R³⁷ is N, O, or S, and preferably N or O. R³⁸ is -R⁴⁵-R⁴⁶-R⁴⁵-, -R⁴⁶-R⁴⁵-, or -R⁴⁵-R⁴⁶-. Here, R⁴⁵ is each independently an alkyl group having 1 to 6 carbon atoms. R⁴⁶ is N, O, or S, and preferably O.

In this embodiment, X^{A} may be each independently a tri-to decavalent organic group.

In yet another embodiment, X^{A} is a group represented by: 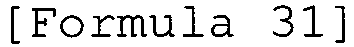 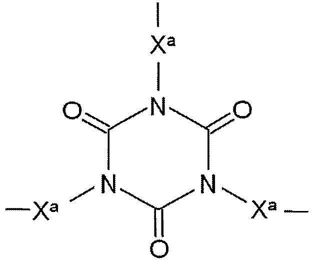 wherein X^{a} is a single bond or a divalent organic group.

X^{a} is a single bond or divalent linking group directly bonded to the isocyanuric ring. X^{a} is preferably a single bond, an alkylene group, or a divalent group containing at least one bond selected from the group consisting of an ether bond, an ester bond, an amide bond, and a sulfide bond, and more preferably a single bond, an alkylene group having 1 to 10 carbon atoms, or a divalent hydrocarbon group having 1 to 10 carbon atoms and containing at least one bond selected from the group consisting of an ether bond, an ester bond, an amide bond, and a sulfide bond.

X^{a} is even more preferably a group represented by the following formula:

- (CX¹²¹X¹²²)ₓ₁-(X^{a1})_{y1}-(CX¹²³X¹²⁴)_{z1}-

wherein X¹²¹ to X¹²⁴ are each independently H, F, OH, or - OSi(OR¹²¹)₃ (wherein three R¹²¹ are each independently an alkyl group having 1 to 4 carbon atoms),
X^{a1} is -C(=O)NH-, -NHC(=O)-, -O-, -C(=O)O-, -OC(=O)-, - OC(=O)O-, or -NHC(=O)NH- (each bond is bonded to CX¹²¹X¹²² on the left side), and
x1 is an integer of 0 to 10, y1 is 0 or 1, and z1 is an integer of 1 to 10.

X^{a1} is preferably -O- or -C(=O)O-.

X^{a} is particularly preferably
a group represented by the following formula:

   -(CF₂)ₘ₁₁-(CH₂)ₘ₁₂-O-(CH₂)ₘ₁₃-
wherein m11 is an integer of 1 to 3, m12 is an integer of 1 to 3, and m13 is an integer of 1 to 3;
a group represented by the following formula:

   -(CF2)ₘ₁₄-(CH₂)ₘ₁₅-O-CH₂CH(OH)-(CH₂)ₘ₁₆-
wherein m14 is an integer of 1 to 3, m15 is an integer of 1 to 3, and m16 is an integer of 1 to 3;
a group represented by the following formula:

   -(CF2)ₘ₁₇-(CH₂)m18-
wherein m17 is an integer of 1 to 3, and m18 is an integer of 1 to 3;
a group represented by the following formula:

   -(CF₂)ₘ₁₉-(CH₂)ₘ₂₀-O-CH₂CH(OSi(OCH₃)₃)-(CH₂)ₘ₂₁-
wherein m19 is an integer of 1 to 3, m20 is an integer of 1 to 3, and m21 is an integer of 1 to 3; or
a group represented by the following formula:

   -(CH₂)ₘ₂₂-
wherein m22 is an integer of 1 to 3.

X^{a} is not limited, and specific examples include -CH₂-, -C₂H₄-, -C₃H₆-, -C₄H₈-, -C₄H₈-O-CH₂-, -CO-O-CH₂-CH (OH) - CH₂-, -(CF₂)ₙ₅- (n5 is an integer of 0 to 4), -(CF₂)ₙ₅-(CH₂)ₘ₅-(n5 and m5 are each independently an integer of 0 to 4), - CF₂CF₂CH₂OCH₂CH(OH)CH₂-, and -CF₂CF₂CH₂OCH₂CH(OSi(OCH₃)₃)CH₂-.

In this embodiment, X^{A} may be each independently a di- or trivalent organic group.

In one embodiment, the fluorine-containing silane compound represented by the formula (A1) or the formula (A2) does not contain a siloxane bond (-Si-O-Si-).

The number average molecular weight of the fluorine-containing silane compound represented by the above formula (A1) or (A2) is not limited, and may be 5 × 10² to 1 × 10⁵. In particular, the average molecular weight is preferably 2,000 to 32,000 and more preferably 2,500 to 12,000 from the viewpoint of friction durability. The "average molecular weight" refers to a number average molecular weight, and the "average molecular weight" is a value obtained by ¹⁹F-NMR measurement.

The surface-treating layer can be formed by treating the substrate surface with the surface-treating agent containing a fluorine-containing silane compound. For example, the surface-treating layer can be obtained by applying the surface-treating agent to the substrate to form a film of the surface-treating agent, and leaving the film to stand still or subjecting the film to a heat treatment to cure the film of the surface-treating agent.

In one embodiment, the fluorine-containing silane compound in the surface-treating agent is a compound represented by the formula (A1).

In another embodiment, the fluorine-containing silane compound in the surface-treating agent is a compound represented by the formula (A2).

In another embodiment, the fluorine-containing silane compound in the surface-treating agent is a compound represented by the formula (A1) and a compound represented by the formula (A2).

In the surface-treating agent, the compound represented by the formula (A2) is preferably 0.1 mol% or more and 35 mol% or less based on the total of the compound represented by the formula (A1) and the compound represented by the formula (A2). The lower limit of the content of the compound represented by the formula (A2) may be preferably 0.1 mol%, more preferably 0.2 mol%, even more preferably 0.5 mol%, yet more preferably 1 mol%, particularly preferably 2 mol%, and especially 5 mol%, based on the total of the compound represented by the formula (A1) and the compound represented by the formula (A2). The upper limit of the content of the compound represented by the formula (A2) may be preferably 35 mol%, more preferably 30 mol%, even more preferably 20 mol%, and yet more preferably 15 mol% or 10 mol%, based on the total of the compound represented by the formula (A1) and the compound represented by the formula (A2). The compound represented by the formula (A2) is preferably 0.1 mol% or more and 30 mol% or less, more preferably 0.1 mol% or more and 20 mol% or less, even more preferably 0.2 mol% or more and 10 mol% or less, yet more preferably 0.5 mol% or more and 10 mol% or less, and particularly preferably 1 mol% or more and 10 mol% or less, such as 2 mol% or more and 10 mol% or less or 5 mol% or more and 10 mol% or less, based on the total of the compound represented by the formula (A1) and the compound represented by the formula (A2). With the compound represented by the formula (A2) being within such a range, friction durability can be more increased.

The component (A) may be a mixture of the compound represented by the formula (A1) or the formula (A2) with a compound obtained by condensing a portion of these compounds.

The surface-treating agent may contain a solvent, an alcohol, an (unreactive) fluoropolyether compound that can be understood as a fluorine-containing oil or preferably a perfluoropolyether compound (hereinafter, collectively referred to as a "fluorine-containing oil"), an (unreactive) silicone compound that can be understood as a silicone oil (hereinafter, referred to as a "silicone oil"), a compatibilizer, a catalyst, a surfactant, a polymerization inhibitor, a sensitizer, and the like.

Examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide and N,N-dimethylacetamide; ether alcohols such as methyl cellosolve, cellosolve, isopropyl cellosolve, butyl cellosolve, and diethylene glycol monomethyl ether; diethylene glycol monoethyl ether acetate; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), 1,1,2,2,3,3,4-heptafluorocyclopentane (e.g., Zeorora H), perfluorobutyl methyl ether (C₄F₉OCH₃) (e.g., HFE 7100), perfluorobutyl ethyl ether (C₄F₉OC₂H₅) (e.g., HFE 7200), perfluorohexyl methyl ether (C₂F₅CF(OCH₃)C₃F₇) (e.g., HFE 7300), CF₃CH₂OH, CF₃CF₂CH₂OH, and (CF₃)₂CHOH. Alternatively, the solvent may be a mixed solvent of two or more of such solvents.

Examples of the alcohol include alcohols having 1 to 6 carbon atoms and optionally substituted with one or more fluorine atoms, such as methanol, ethanol, iso-propanol, tert-butanol, CF₃CH₂OH, CF₃CF₂CH₂OH, (CF₃)₂CHOH, H(CF₂CF₂)CH₂OH, H(CF₂CF₂)₂CH₂OH, and H(CF₂CF₂)₃CH₂OH. Such an alcohol added to the surface-treating agent increases the stability of the surface-treating agent and improves the miscibility between the component (A) and the component (B).

In a preferable embodiment, the surface-treating agent contains a solvent and an alcohol.

The alcohol content is preferably 0.1 to 50% by mass, more preferably 0.5 to 30% by mass, even more preferably 1.0 to 20% by mass, and yet more preferably 2.0 to 10% by mass, based on the total of the solvent and the alcohol.

The fluorine-containing oil is not limited, and examples include compounds (perfluoropolyether compounds) represented by the following general formula (3):

Rf⁵-(OC₄F₈)ₐ'-(OC₃F₆)_{b'}-(OC₂F₄)_{c'}-(OCF₂)_{d'}-Rf⁶ (3)

wherein Rf⁵ represents a C₁₋₁₆ alkyl group optionally substituted with one or more fluorine atoms (preferably, a C₁₋₁₆ perfluoroalkyl group), Rf⁶ represents a C₁₋₁₆ alkyl group optionally substituted with one or more fluorine atoms (preferably, a C₁₋₁₆ perfluoroalkyl group), a fluorine atom, or a hydrogen atom, and Rf⁵ and Rf⁶ are more preferably each independently a C₁₋₃ perfluoroalkyl group;
a', b', c' and d' respectively represent the numbers of repeating units of four perfluoropolyethers constituting the main backbone of the polymer and are mutually independently an integer of 0 or more and 300 or less, and the sum of a', b', c', and d' is at least 1, preferably 1 to 300, and more preferably 20 to 300; and the occurrence order of the respective repeating units in parentheses provided with the subscript a', b', c', or d' is not limited in the formula. Among these repeating units, -(OC₄F₈)- may be any of - (OCF₂CF₂CF₂CF₂)-, - (OCF(CF₃)CF₂CF₂)-, - (OCF₂CF(CF₃)CF₂)-, - (OCF₂CF₂CF(CF₃))-, - (OC(CF₃)₂CF₂)-, - (OCF₂C(CF₃)₂)-, - (OCF(CF₃)CF(CF₃))-, -(OCF(C₂F₅)CF₂)-, and (OCF₂CF(C₂F₅))-, and is preferably -(OCF₂CF₂CF₂CF₂)-. -(OC₃F₆)- may be any of - (OCF₂CF₂CF₂)-, - (OCF (CF₃)CF₂)-, and (OCF₂CF(CF₃))-, and is preferably - (OCF₂CF₂CF₂)-. -(OC₂F₄)- may be any of -(OCF₂CF₂)- and (OCF(CF₃))-, and is preferably -(OCF₂CF₂)-.

Examples of the perfluoropolyether compound represented by the above general formula (3) include a compound represented by any of the following general formulae (3a) and (3b) (which may be used singly or as a mixture of two or more).

Rf⁵-(OCF₂CF₂CF₂)_{b"}-Rf⁶ (3a)

Rf⁵-(OCF₂CF₂CF₂CF₂)_{a"}-(OCF₂CF₂CF₂)_{b"}-(OCF₂CF₂)_{c"}-(OCF₂)_{d"}-Rf⁶ (3b)

wherein Rf⁵ and Rf⁶ are as described above; in the formula (3a), b" is an integer of 1 or more and 100 or less; and in the formula (3b), a" and b" are each independently an integer of 0 or more and 30 or less, and c" and d" are each independently an integer of 1 or more and 300 or less. The occurrence order of the respective repeating units enclosed in parentheses provided with the subscript a", b", c", or d" is not limited in the formulae.

From another viewpoint, the fluorine-containing oil may be a compound represented by the general formula Rf³-F, wherein Rf³ is a C₅₋₁₆ perfluoroalkyl group. The fluorine-containing oil may be a chlorotrifluoroethylene oligomer.

The fluorine-containing oil may have an average molecular weight of 500 to 10,000. The molecular weight of the fluorine-containing oil may be measured using GPC.

The fluorine-containing oil may be contained in an amount of, for example, 0 to 50 mass%, preferably 0 to 30 mass%, and more preferably 0 to 5 mass%, based on the surface-treating agent. In one embodiment, the surface-treating agent is substantially free of the fluorine-containing oil. Being substantially free of the fluorine-containing oil means that the fluorine-containing oil is not contained at all, or an extremely small amount of the fluorine-containing oil may be contained.

In one embodiment, the average molecular weight of the fluorine-containing oil may be greater than the average molecular weight of the fluorine-containing silane compound. With such average molecular weights, better friction durability and surface lubricity can be obtained particularly when a surface-treating layer is formed by a vacuum deposition method.

In one embodiment, the average molecular weight of the fluorine-containing oil may be smaller than the average molecular weight of the fluorine-containing silane compound. With such average molecular weights, a cured product having high friction durability and high surface lubricity can be formed while suppressing deterioration of the transparency of the surface-treating layer obtained from the compound.

The fluorine-containing oil contributes to increasing surface lubricity of the layer formed by the surface-treating agent.

For example, a linear or cyclic silicone oil having 2,000 or fewer siloxane bonds can be used as the silicone oil. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

Such a surface-treating agent can include, for example, 0 to 300 parts by mass and preferably 50 to 200 parts by mass of such silicone oil based on a total of 100 parts by mass of the fluorine-containing silane compound of the present disclosure (in the case of two or more, the total thereof, and the same also applies below).

The silicone oil contributes to increasing the surface lubricity of the surface-treating layer.

Examples of the compatibilizing agent include a fluorine-substituted alcohol such as 2,2,2-trifluoroethanol, 2,2,3,3,3-pentafluoro-1-propanol, or 2,2,3,3,4,4,5,5-octafluoro-1-pentanol, and preferably a fluorine-substituted alcohol having a CF₂H terminal, as well as a fluorine-substituted aryl such as 1,3-bis(trifluoromethyl)benzene and preferably a fluorine-substituted benzene.

Examples of the catalyst include acids (such as acetic acid and trifluoroacetic acid), bases (such as ammonia, triethylamine, and diethylamine), and transition metals (such as Ti, Ni, and Sn).

The catalyst promotes hydrolysis and dehydration condensation of the fluorine-containing silane compound of the present disclosure, and promotes formation of the layer to be formed by the surface-treating agent.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The surface-treating agent can be formed into pellets by impregnating a porous material such as a porous ceramic material or a metal fiber such as a fiber obtained by, for example, solidifying steel wool in a cotton-like form therewith. Such pellets can be used in, for example, vacuum deposition.

The surface-treating agent may contain, in addition to the components described above, trace amounts of Pt, Rh, Ru, 1,3-divinyltetramethyldisiloxane, triphenylphosphine, NaCl, KCl, silane condensation product, and the like as impurities.

The layer of the surface-treating agent can be formed by applying the surface-treating agent to the underlayer. The coating method is not limited. For example, a wet coating method and a dry coating method can be used.

Examples of the wet coating method include dip coating, spin coating, flow coating, spray coating, roll coating, gravure coating, and similar methods.

Examples of the dry coating method include deposition (usually, vacuum deposition), sputtering, CVD, and similar methods. Specific examples of the deposition method (usually, a vacuum deposition method) include resistive heating, highfrequency heating using electron beam, microwave, or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent can be applied to the substrate surface after being diluted with a solvent. From the viewpoint of the stability of the composition of the present disclosure and the volatility of solvents, the following solvents are preferably used: perfluoroaliphatic hydrocarbons having 5 to 12 carbon atoms (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin (registered trademark) AC-6000 manufactured by Asahi Glass Co., Ltd.), and 1,1,2,2,3,3,4-heptafluorocyclopentane (such as Zeorora (registered trademark) H manufactured by Zeon Corporation)); alkyl perfluoroalkyl ethers (the perfluoroalkyl group and the alkyl group may be linear or branched) such as hydrofluoroether (HFE) (such as perfluoropropyl methyl ether (C₃F₇OCH₃) (such as Novec (trademark) 7000 manufactured by Sumitomo 3M Limited), perfluorobutyl methyl ether (C₄F₉OCH₃) (such as Novec (trademark) 7100 manufactured by Sumitomo 3M Limited), perfluorobutyl ethyl ether (C₄F₉OC₂H₅) (such as Novec (trademark) 7200 manufactured by Sumitomo 3M Limited), and perfluorohexyl methyl ether (C₂F₅CF(OCH₃)C₃F₇) (such as Novec (trademark) 7300 manufactured by Sumitomo 3M Limited), or CF₃CH₂OCF₂CHF₂ (such as Asahiklin (registered trademark) AE-3000 manufactured by Asahi Glass Co., Ltd.)). One of these solvents may be used singly, or two or more may be used as a mixture. In particular, hydrofluoroether is preferable, and perfluorobutyl methyl ether (C₄F₉OCH₃) and/or perfluorobutyl ethyl ether (C₄F₉OC₂H₅) is particularly preferable.

When using the dry coating method, the surface-treating agent may be directly subjected to the dry coating method, or may be diluted with the above solvent before being subjected to the dry coating method.

A layer of the surface-treating agent is preferably formed such that the surface-treating agent coexists in the layer with a catalyst for hydrolysis and dehydrative condensation. Conveniently, in the case of a wet coating method, the surface-treating agent is diluted with a solvent, and then, immediately before application to the substrate surface, a catalyst may be added to the diluted solution of the surface-treating agent. In the case of a dry coating method, the surface-treating agent to which a catalyst has been added is directly used in a deposition (usually vacuum deposition) treatment, or a pellet-like material may be used in a deposition (usually vacuum deposition) treatment, wherein the pellets are obtained by impregnating a porous body of metal such as iron or copper with the surface-treating agent to which the catalyst has been added.

The catalyst may be any suitable acid or base. Acid catalyst may be, for example, acetic acid, formic acid, or trifluoroacetic acid. The base catalyst may be, for example, ammonia or an organic amine.

The thickness of the surface-treating layer is not limited. Preferably, the thickness of the surface-treating layer in the case of an optical member is in the range of 1 to 200 nm, preferably 1 to 100 nm, and more preferably 1 to 50 nm, such as 1 to 30 nm, from the viewpoint of optical performance, friction durability, and antifouling properties.

### (Article)

The present disclosure provides an article comprising the laminate of the present disclosure.

In a preferable embodiment, the article of the present disclosure may be glass or mirror glass for vehicles, marine vessels, and aircrafts, such as automobile glass, automobile door mirror or automobile fender mirror, or glass for use in on-board cameras. In addition, the article may be glass used in security cameras and outdoor glass such as roadside mirror.

Moreover, the article of the present disclosure may be an optical member. Examples of the optical member include lenses of glasses or the like; displays such as PDPs and LCDs; touch panel sheets for devices such as cell phones and portable information terminals; optical discs such as Blu-ray(R) discs, DVD discs, CD-Rs, and MOs; optical fibers; and display surfaces of watches and clocks.

The article of the present disclosure may be medical equipment or a medical material.

So far, the laminate and the article of the present disclosure have been described in detail. The laminate, the article, and the like of the present disclosure are not limited to those exemplified above.

### Examples

Hereinafter, the laminate of the present disclosure will now be described in the Examples, but the present disclosure is not limited to the following Examples. In the Examples, the occurrence order of repeating units constituting fluoropolyether is not limited, and the chemical formulae shown below indicate average compositions.

Chemical solutions (A) to (F) were prepared as compositions for forming an underlayer.

### (Polysilazane-containing composition)

(A): Polysilazane (Durazane 2800, manufactured by Merck) was dissolved in dibutyl ether (manufactured by Tokyo Chemical Industry Co., Ltd.) so as to have a concentration of 0.2% by mass, and the mixture was regarded as a chemical solution (A) .
(B): Polysilazane (Durazane 2800, manufactured by Merck) was dissolved in dibutyl ether (manufactured by Tokyo Chemical Industry Co., Ltd.) so as to have a concentration of 0.5% by mass, and the mixture was regarded as a chemical solution (B).
(C): Polysilazane (Durazane 2800, manufactured by Merck) was dissolved in dibutyl ether (manufactured by Tokyo Chemical Industry Co., Ltd.) so as to have a concentration of 5.0% by mass, and the mixture was regarded as a chemical solution (C).

### (Aminosilane-containing composition)

(D): Bis-3-trimethoxysilylpropylamine (manufactured by Tokyo Chemical Industry Co., Ltd.) was dissolved in hydrofluoroether (Novec HFE 7200, manufactured by 3M) so as to have a concentration of 0.2% by mass, and the mixture was regarded as a chemical solution (D).
(E): Bis-3-trimethoxysilylpropylamine (manufactured by Tokyo Chemical Industry Co., Ltd.) was dissolved in hydrofluoroether (Novec HFE 7200, manufactured by 3M) so as to have a concentration of 0.5% by mass, and the mixture was regarded as a chemical solution (E).
(F): Bis-3-trimethoxysilylpropylamine (manufactured by Tokyo Chemical Industry Co., Ltd.) was dissolved in hydrofluoroether (Novec HFE 7200, manufactured by 3M) so as to have a concentration of 5.0% by mass, and the mixture was regarded as a chemical solution (F).

The following water-repelling solutions (1) to (6) were prepared as compositions for forming a surface-treating layer.
(1): The following compound (1) was dissolved in hydrofluoroether (Novec HFE 7200, manufactured by 3M) so as to have a concentration of 0.1% by mass, and the mixture was regarded as a water-repelling solution (1).
(2): The following compound (2) was dissolved in hydrofluoroether (Novec HFE 7200, manufactured by 3M) so as to have a concentration of 0.1% by mass, and the mixture was regarded as a water-repelling solution (2).
(3): The following compound (3) was dissolved in hydrofluoroether (Novec HFE 7200, manufactured by 3M) so as to have a concentration of 0.1% by mass, and the mixture was regarded as a water-repelling solution (3).
(4): The following compound (4) was dissolved in hydrofluoroether (Novec HFE 7200, manufactured by 3M) so as to have a concentration of 0.1% by mass, and the mixture was regarded as a water-repelling solution (4).
(5): The following compound (5) was dissolved in hydrofluoroether (Novec HFE 7200, manufactured by 3M) so as to have a concentration of 0.1% by mass, and the mixture was regarded as a water-repelling solution (5).
(6): The following compound (6) was dissolved in hydrofluoroether (Novec HFE 7200, manufactured by 3M) so as to have a concentration of 0.1% by mass, and the mixture was regarded as a water-repelling solution (6).

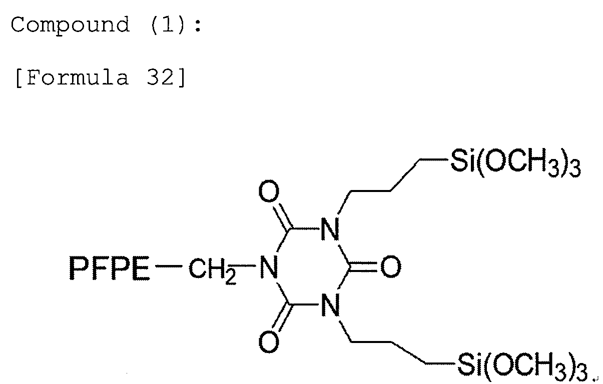

wherein PFPE is CF₃CF₂CF₂-(OCF₂CF₂CF₂)₂₅-OCF₂CF₂-. 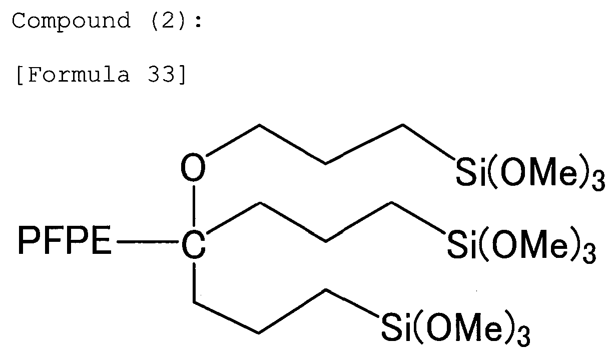 wherein PFPE is CF₃-(OCF₂CF₂)₂₂(OCF₂)₂₀-. 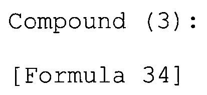 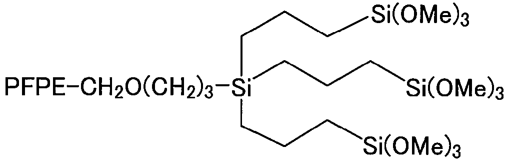 wherein PFPE is CF₃-(OCF₂CF₂)₂₂(OCF₂)₂₀-.

Compound (4): CF₃CF₂CF₂-(OCF₂CF₂CF₂)₂₅-OCF₂CF₂-CH₂OCH₂CH₂CH₂Si(OCH₃)₃

Compound (5): C₆F₁₃-ph-Si(OMe)₃

Compound (6): C₆F₁₃-CH₂CH₂-Si(OMe)₃

wherein Me is a methyl group, and ph is a phenylene group.

### (Substrate)

The top surface of a float glass (clear) substrate (planar dimension 70 mm × 150 mm) having a thickness of 2.0 mm was washed with water and alcohol and then dried to give a glass substrate.

Using an atmospheric pressure plasma discharge apparatus (Si-PlasmaR, manufactured by Creating Nano Tech., Inc.), an atmospheric pressure plasma treatment was performed on the top surface of the glass substrate under the following conditions for washing and activation.

### <Gas conditions>

Discharge gas: Argon gas (Ar), Reactive gas: Oxygen gas (O₂)

### <Plasma irradiation conditions>

Plasma power: 744 W (output controlled in the range of 740 to 750 W)
Ar flow: 34 L/min (flow controlled at 30 to 40 L/min)
O2 flow: 34 L/min (flow controlled at 30 to 40 L/min)
PCW (cooling water): 2.6 L/min (flow controlled at 2.0 to 3.0 L/min)
Plasma irradiation was performed, with the distance between the plasma irradiated surface and the top surface of the substrate being within the range of 0.5 to 3.0 mm.

### (Formation of underlayer)

Using the chemical solutions (A) to (F) prepared above, the underlayer was formed on the glass substrate. Specifically, 300 mL each of the chemical solutions (A) to (F) prepared above was added to a separate vessel. Then, the glass substrate was immersed in the composition in each vessel for 20 seconds. Thereafter, the substrate was raised at 20 mm/sec, the treated substrate was allowed to stand still at room temperature for 3 hours, and thus underlayer-treated substrates (A) to (F) were formed.

### (Formation of surface-treating layer)

### Example 1

Using a commercially available spray coater equipped with two fluid nozzles, the water-repelling solution (1) prepared above was uniformly sprayed onto the surface of the underlayer-treated substrate (A) at a head speed of 70 mm/sec. The amount of the water-repelling solution (1) applied was 60 g per unit m² of the substrate. Then, the substrate was removed and left to stand still in air at room temperature for 24 hours, and thus a water-repelling substrate (1A) was obtained.

### Example 2

A water-repelling substrate (1B) was obtained in the same manner as in Example 1 except that the underlayer-treated substrate (B) was used in place of the underlayer-treated substrate (A).

### Example 3

A water-repelling substrate (1C) was obtained in the same manner as in Example 1 except that the underlayer-treated substrate (C) was used in place of the underlayer-treated substrate (A).

### Example 4

A water-repelling substrate (1D) was obtained in the same manner as in Example 1 except that the underlayer-treated substrate (D) was used in place of the underlayer-treated substrate (A).

### Example 5

A water-repelling substrate (1E) was obtained in the same manner as in Example 1 except that the underlayer-treated substrate (E) was used in place of the underlayer-treated substrate (A).

### Example 6

A water-repelling substrate (1F) was obtained in the same manner as in Example 1 except that the underlayer-treated substrate (F) was used in place of the underlayer-treated substrate (A).

### Example 7

Using a commercially available spray coater equipped with two fluid nozzles, the water-repelling solution (2) prepared above was uniformly sprayed onto the surface of the underlayer-treated substrate (B) at a head speed of 70 mm/sec. The amount of the water-repelling solution (2) applied was 60 g per unit m² of the substrate. Then, the substrate was removed and left to stand still in air at room temperature for 24 hours, and thus a water-repelling substrate (2B) was obtained.

### Example 8

A water-repelling substrate (2E) was obtained in the same manner as in Example 6 except that the underlayer-treated substrate (E) was used in place of the underlayer-treated substrate (B).

### Example 9

Using a commercially available spray coater equipped with two fluid nozzles, the water-repelling solution (3) prepared above was uniformly sprayed onto the surface of the underlayer-treated substrate (B) at a head speed of 70 mm/sec. The amount of the water-repelling solution (3) applied was 60 g per unit m² of the substrate. Then, the substrate was removed and left to stand still in air at room temperature for 24 hours, and thus water-repelling substrate (3B) was obtained.

### Comparative Example 1

Using a commercially available spray coater equipped with two fluid nozzles, the water-repelling solution (1) prepared above was uniformly sprayed onto the surface of a glass substrate not treated with the underlayer at a head speed of 70 mm/sec. The amount of the water-repelling solution (1) applied was 50 g per unit m² of the substrate. Then, the substrate was removed and left to stand still in air at room temperature for 24 hours, and thus water-repelling substrate (1) was obtained.

### Comparative Example 2

A water-repelling substrate (2) was obtained in the same manner as in Comparative Example 1 except that the water-repelling solution (2) was used in place of the water-repelling solution (1).

### Comparative Example 3

A water-repelling substrate (3) was obtained in the same manner as in Comparative Example 1 except that the water-repelling solution (3) was used in place of the water-repelling solution (1).

### Comparative Example 4

A water-repelling substrate (4) was obtained in the same manner as in Comparative Example 1 except that the water-repelling solution (4) was used in place of the water-repelling solution (1).

### Comparative Example 5

A water-repelling substrate (5) was obtained in the same manner as in Comparative Example 1 except that the water-repelling solution (5) was used in place of the water-repelling solution (1).

### Comparative Example 6

A water-repelling substrate (6) was obtained in the same manner as in Comparative Example 1 except that the water-repelling solution (6) was used in place of the water-repelling solution (1).

### (Evaluation)

The water-repelling substrates 1A to 1F, 2B, 2E, 3B, and 1 to 6 obtained above were subjected to the following evaluations.

### ·Measurement of static water contact angle

The static water contact angle was measured using a fully automatic contact angle meter DropMaster 700 (manufactured by Kyowa Interface Science Co., Ltd.). Specifically, the static water contact angle was obtained by dripping 2 µL of water from a microsyringe onto a horizontally placed substrate and taking a still image with a video microscope 1 second after the dripping. Concerning the measured value of the static water contact angle, five different points on the surface-treating layer of the substrate were measured, and the average value thereof was calculated and used.

### ·Evaluation of accelerated weather resistance

An accelerated weathering resistance test was performed on the water-repelling substrates 1A to 1F, 2B, 2E, 3B, and 1 to 6 obtained above. The steps of (1) UV irradiation for 24 hours, (2) irradiation with ion-exchanged water for 5 minutes, and (3) leaving the substrate in the dark for 1 hour were repeated three time, which were thus regarded as one cycle (75 hours), and the static contact angle of water was measured after each cycle. For UV irradiation, a UVB-313 lamp (manufactured by Q-Lab, irradiance of 0.63 W/m² at 310 nm) was used, the distance between the lamp and the surface-treating layer of the substrate was 5 cm, and the temperature of the plate on which the substrate was placed was 63°C. The substrate was temporarily removed when measuring the static water contact angle, and the surface-treating layer was wiped back and forth five times with Kimwipe (trade name, manufactured by Jujo Kimberly Co., Ltd.). Immediately thereafter, the static water contact angle was measured. The static water contact angle after a given number of cycles is shown in Table 1 wherein the result of Test Example 1 is denoted as the number of cycles being 0.

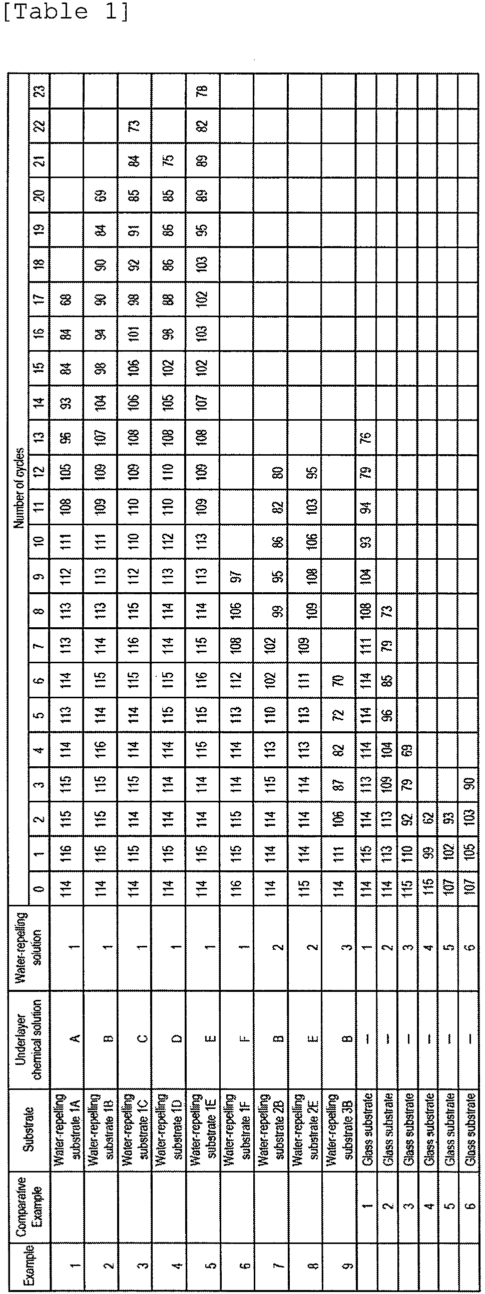

### Industrial Applicability

The laminate of the present disclosure can be suitably used in various applications, especially an article for outdoor applications.

## Claims

1. A laminate comprising a substrate, an underlayer disposed on the substrate, and a surface-treating layer disposed on the underlayer, wherein
the underlayer is a layer formed of:
(A) polysilazane represented by the following formula (P): 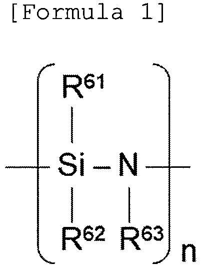 wherein
R⁶¹ is a hydrogen atom or a C₁₋₆ alkyl group,
R⁶² is a hydrogen atom, a C₁₋₆ alkyl group, or a group having a functional group,
R⁶³ is a hydrogen atom, a C₁₋₆ alkyl group, or a group having a functional group, and
n is an integer of 2 to 100; or
(B) aminosilane represented by the following formula (Q):
[Formula 2] N(R⁷¹-SiR⁷²₃)ₘR⁷³₃₋ₘ
wherein
R⁷¹ is each independently a C₁₋₆ alkylene group,
R⁷² is each independently a hydrolyzable group,
R⁷³ is a hydrogen atom or a C₁₋₆ alkyl group, and
m is 2 or 3; and
the surface-treating layer is a layer formed of a fluorine-containing silane compound.

2. The laminate according to claim 1, wherein the fluorine-containing silane compound is a compound represented by the following formula (A1) or (A2):
[Formula 3]
**R^{F1}_{α1}**-**X^{A}**-**R^{Si}**_{β1} **(A1)**
**R^{Si} _{γ1}-X^{A}-R^{F2}-X^{A}**-**R^{Si}_{γ1}** **(A2)**
wherein
R^{F1} is each independently Rf¹ or Rf¹R^{F}-O_{q}-,
R^{F2} is -R^{f2}- or -Rf²ₚ-R^{F}-O_{q}-,
R^{F} is each independently a divalent fluoropolyether group,
Rf¹ is each independently a C₁₋₁₆ alkyl group optionally substituted with one or more fluorine atoms,
Rf² is a C₁₋₆ alkylene group optionally substituted with one or more fluorine atoms,
p is 0 or 1,
q is each independently 0 or 1,
R^{Si} is each independently a monovalent group containing a Si atom to which a hydroxyl group, a hydrolyzable group, a hydrogen atom, or a monovalent organic group is bonded,
at least one R^{Si} is a monovalent group containing a Si atom to which a hydroxyl group or a hydrolyzable group is bonded,
X^{A} is each independently a single bond or a di- to decavalent organic group,
α1 is an integer of 1 to 9,
β1 is an integer of 1 to 9, and
γ1 is each independently an integer of 1 to 9.

3. The laminate according to claim 2, wherein
Rf¹ is each independently a C₁₋₁₆ perfluoroalkyl group, and
Rf² is each independently a C₁₋₆ perfluoroalkylene group.

4. The laminate according to claim 2 or 3, wherein
R^{F1} is each independently Rf¹R^{F}-O_{q}-, and
R^{F2} is -Rf²ₚ-R^{F}-O_{q}-.

5. The laminate according to any one of claims 2 to 4, wherein
R^{F} is each independently a group represented by the following formula:
-(OC₆F₁₂)ₐ- (OC₅F₁₀)b-(OC₄F₈)_{c}-(OC₃R^{Fa}₆)_{d}-(OC₂F₄)ₑ-(OCF₂)_{f}-
wherein
R^{Fa} is each independently a hydrogen atom, a fluorine atom, or a chlorine atom; and
a, b, c, d, e, and f are each independently an integer of 0 to 200, the sum of a, b, c, d, e, and f is 1 or more, and the occurrence order of the respective repeating units enclosed in parentheses provided with a, b, c, d, e, or f is not limited in the formula, provided that when all R^{Fa} groups are hydrogen atoms or chlorine atoms, at least one of a, b, c, e, and f is 1 or more.

6. The laminate according to claim 5, wherein R^{Fa} is a fluorine atom.

7. The laminate according to any one of claims 2 to 6, wherein
R^{F} is each independently a group represented by the following formula (f1), (f2), (f3), (f4), (f5), or (f6):
-(OC₃F₆)_{d}-(OC₂F₄)ₑ- (f1)
wherein d is an integer of 1 to 200, and e is 0 or 1;
- (OC₄F₈)_{c}-(OC₃F₆)_{d}-(OC₂F₄)ₑ-(OCF₂)_{f}- (f2)
wherein c and d are each independently an integer of 0 to 30,
e and f are each independently an integer of 1 to 200,
the sum of c, d, e, and f is an integer of 10 to 200, and
the occurrence order of the respective repeating units enclosed in parentheses provided with the subscript c, d, e, or f is not limited in the formula;
-(R⁶-R⁷)_{g}- (f3)
wherein R⁶ is OCF₂ or OC₂F₄,
R⁷ is a group selected from OC₂F₄, OC₃F₆, OC₄F_{8,} OC₅F₁₀, and OC₆F₁₂, or is a combination of two or three groups selected from these groups, and
g is an integer of 2 to 100;
-(R⁶-R⁷)_{g}-R^{r}-(R^{7'}-R^{6'})_{g}'- (f4)
wherein R⁶ is OCF₂ or OC₂F₄,
R⁷ is a group selected from OC₂F₄, OC₃F₆, OC₄F₈, OC₅F₁₀ and OC₆F₁₂, or is a combination of two or three groups independently selected from these groups,
R^{6'} is OCF₂ or OC₂F₄,
R^{7'} is a group selected from OC₂F₄, OC₃F₆, OC₄F₈, OC₅F₁₀, and OC₆F₁₂, or is a combination of two or three groups independently selected from these groups,
g is an integer of 2 to 100,
g' is an integer of 2 to 100, and
R^{r} is any of: 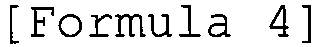 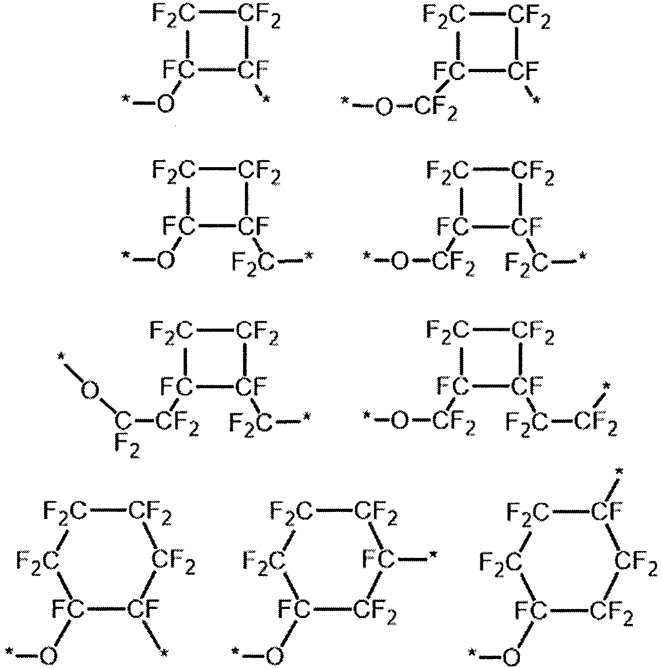 wherein * represents a bond position;
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein e is an integer of 1 or more and 200 or less, a, b, c, d, and f are each independently an integer of 0 or more and 200 or less, and the occurrence order of the respective repeating units enclosed in parentheses provided with a, b, c, d, e or f is not limited in the formula; and
-(OC6F12)a-(OC₆F₁₀)b-(OC₄F₈)_{c}-(OC₃F₆)d-(OC₂F₄)e-(OCF₂)f- (f6)
wherein f is an integer of 1 or more and 200 or less, a, b, c, d, and e are each independently an integer of 0 or more and 200 or less, and the occurrence order of the respective repeating units enclosed in parentheses provided with a, b, c, d, e or f is not limited in the formula.

8. The laminate according to any one of claims 2 to 7, wherein
R^{Si} is a group represented by the following formula (S1), (S2), (S3), (S4), or (S5): 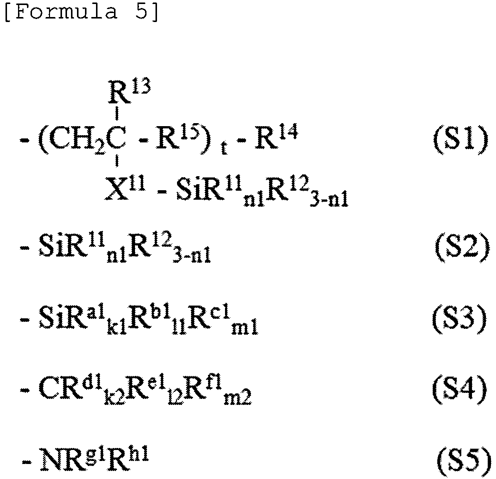 wherein
R¹¹ is each independently a hydroxyl group or a hydrolyzable group,
R¹² is each independently a hydrogen atom or a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently at each occurrence a single bond, an oxygen atom, an alkylene group having 1 to 6 carbon atoms, or an alkyleneoxy group having 1 to 6 carbon atoms,
R^{a1} is each independently -Z¹-S1R²¹ₚ₁R²²_{q1}R²³ᵣ₁,
Z¹ is each independently an oxygen atom or a divalent organic group,
R²¹ is each independently -Z^{1'}-SiR^{21'}_{p1'}R^{22'}_{q1'}R^{23'}_{r1'},
R²² is each independently a hydroxyl group or a hydrolyzable group,
R²³ is each independently a hydrogen atom or a monovalent organic group,
p1 is each independently an integer of 0 to 3,
q1 is each independently an integer of 0 to 3,
r1 is each independently an integer of 0 to 3,
the sum of p1, q1, and r1 is 3 in the (SiR²¹ₚ₁R²²_{q1}R²³ᵣ₁) unit,
Z^{1'} is each independently an oxygen atom or a divalent organic group,
R^{21'} is each independently -Z^{1"}-SiR^{22"}_{q1"}R^{23"}_{r1"},
R^{22'} is each independently a hydroxyl group or a hydrolyzable group,
R^{23'} is each independently a hydrogen atom or a monovalent organic group,
p1' is each independently an integer of 0 to 3,
q1' is each independently an integer of 0 to 3,
r1' is each independently an integer of 0 to 3,
the sum of p1', q1', and r1' is 3 in the (SiR^{21'}_{p1'}R^{22'}_{q1'}R^{23'}_{r1'}) unit,
Z^{1"} is each independently an oxygen atom or a divalent organic group,
R^{22"} is each independently a hydroxyl group or a hydrolyzable group,
R^{23"} is each independently a hydrogen atom or a monovalent organic group,
q1" is each independently an integer of 0 to 3,
r1" is each independently an integer of 0 to 3,
the sum of q1" and r1" is 3 in the (SiR^{22"}_{q1"}R^{23"}_{r1"}) unit,
R^{b1} is each independently a hydroxyl group or a hydrolyzable group,
R^{c1} is each independently a hydrogen atom or a monovalent organic group,
k1 is each independently an integer of 0 to 3,
l1 is each independently an integer of 0 to 3,
m1 is each independently an integer of 0 to 3,
the sum of k1, l1, and m1 is 3 in the (SiR^{a1}ₖ₁R^{b1}₁₁R^{c1}ₘ₁) unit,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
the sum of p2, q2, and r2 is 3 in the (CR³¹ₚ₂R³²_{q2}R³³ᵣ₂) unit,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
the sum of q2' and r2' is 3 in the (CR^{32'}_{q2'}R^{33'}_{r2'}) unit,
Z³ is each independently a single bond, an oxygen atom, or a divalent organic group,
R³⁴ is each independently a hydroxyl group or a hydrolyzable group,
R³⁵ is each independently a hydrogen atom or a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
the sum of k2, l2, and m2 is 3 in the (CR^{d1}ₖ₂R^{e1}ₗ₂R^{f1}ₘ₂) unit,
R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is each independently a single bond, an oxygen atom, or a divalent organic group,
provided that in the formulae (S1), (S2), (S3), (S4), and (S5), at least one Si atom to which a hydroxyl group or a hydrolyzable group is bonded is present.

9. The laminate according to any one of claims 2 to 8, wherein α1, β1, and γ1 are each 1.

10. The laminate according to any one of claims 2 to 9, wherein X^{A} is a single bond or a divalent organic group represented by the following formula:
-(R⁵¹)ₚ₅-(X⁵¹)_{q5}-
wherein
R⁵¹ is a single bond or -(CH₂)ₛ₅-,
s5 is an integer of 1 to 20,
X⁵¹ is -(X¹²)₁₅-,
X⁵² each independently represents a group selected from the group consisting of -O-, -S-, -CO-, -NR⁵⁴-, -(CH₂)ₙ₅-, - COO-, -OCO-, -CONR⁵⁴-, -NR⁵⁴CO-, -O-CONR⁵⁴-, -NR⁵⁴CO-O-, - Si(R⁵³)₂-, and -(Si(R⁵³)₂O)ₘ₅-Si(R⁵³)₂-,
R⁵³ is each independently a phenyl group, a C₁₋₆ alkyl group, or a C₁₋₆ alkoxy group,
R⁵⁴ is each independently a hydrogen atom, a phenyl group, or a C₁₋₆ alkyl group,
m5 is each independently an integer of 1 to 100,
n5 is each independently an integer of 1 to 20,
l5 is an integer of 1 to 10,
p5 is 0 or 1, and
q5 is 0 or 1,
provided that at least one of p5 and q5 is 1, the occurrence order of the respective repeating units enclosed in parentheses provided with p5 or q5 is not limited, and
the right side is bonded to R^{Si}.

11. The laminate according to any one of claims 2 to 8, wherein X^{A} is a group represented by the following formula: 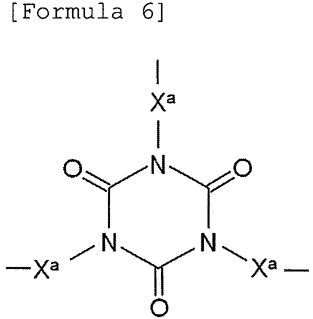 wherein X^{a} is a single bond or a divalent organic group.

12. A laminate according to any one of claims 1 to 11, wherein the polysilazane is represented by formula (P) wherein R⁶¹ is a hydrogen atom, R⁶² is a hydrogen atom, and R⁶³ is a hydrogen atom.

13. The laminate according to any one of claims 1 to 12, wherein the polysilazane has a number average molecular weight of 1,000 to 10,000.

14. The laminate according to any one of claims 1 to 13, wherein the aminosilane is represented by the following formula (Q-1):
[Formula 7] HN(R⁷¹-SiR⁷²₃)₂
wherein
R⁷¹ is each independently a C₁₋₆ alkylene group, and
R⁷² is each independently a hydrolyzable group.

15. The laminate according to any one of claims 1 to 14, wherein the substrate is glass, metal, or ceramic.

16. An article comprising the laminate according to any one of claims 1 to 15.

17. The article according to claim 16, which is automobile glass, outdoor glass, or a display.
